# EUROPEAN PATENT SPECIFICATION

(11) **EP 2 305 760 B1**
(45) Date of publication and mention of the grant of the patent: **09.04.2014**
(21) Application number: 10177573.2
(22) Date of filing: 20.09.2010
(51) Int. Cl.: C09D 11/00

(54) **Pigment dispersion liquid, method of producing the same, and ink composition**
Pigmentdispersionsflüssigkeit, Verfahren zu deren Herstellung und Tintenzusammensetzung
Liquide de dispersion de pigments, son procédé de production et composition d'encre

(30) Priority: 30.09.2009 JP 2009227994
(43) Date of publication of application: 06.04.2011
(73) Proprietor: Fujifilm Corporation, Minato-ku Tokyo (JP)
(72) Inventor: Sasada, Misato, Kanagawa (JP); Ikoshi, Masao, Kanagawa (JP)
(74) Representative: HOFFMANN EITLE

(56) References cited:
- EP-A1- 2 045 300
- US-A1- 2009 169 748
- US-A1- 2009 170 986
- US-A1- 2009 208 652

## Description

### BACKGROUND OF THE INVENTION

### Field of Invention

The present invention relates to a pigment dispersion liquid, a method of producing the same, and an ink composition.

### Description of the Related Art

Various recoding media have been investigated for the possibility of use as media on which an image is recorded by inkjet recording, and for establishment of a technique for forming high quality images. Regarding ink, color materials such as pigments have been studied as ink materials that provide water resistance, light resistance, or the like.
However, satisfactory properties such as color optical density, ink fixing property, or resolution are sometimes not attained when recording on plain paper. This has been a problem in the case of high-speed inkjet recording, and especially in the case of single-pass high-speed inkjet recording, in which recording can be performed with a single operation of a recording head, rather than in the case of shuttle-scan high-speed inkjet recording.
For such high-speed printing, an ink composition containing a hydrophobic resin dispersant has been preferably used.
On the other hand, an ink composition containing a pigment, a dispersant, and a urethane-modified polyester resin is disclosed which itself has good storage stability and imparts high glossiness to printed images (see, for example, Japan Patent No. 4,174,666).

### SUMMARY OF THE INVENTION

However, the method described in Japan Patent No. 4,174,666 is not satisfactory for attaining scratch resistance and high image density of an image formed using the ink composition. In this regard, an ink containing a pigment covered with a hydrophobic resin is preferably used; however, even in this case, the stability of the ink composition itself is not satisfactory from the viewpoint of, specifically, dispersion stability in a dispersion liquid having a high pigment concentration, and especially from the viewpoint of inhibition of precipitation.
Precipitation generated in the dispersion liquid tends to adversely affect the stability of a prepared ink composition, the scratch resistance of an image, and the like.

The present invention has been made in view of the above circumstances and provides a pigment dispersion liquid, a method of producing the same, and an ink composition.

According to a first aspect of the invention, there is provided a pigment dispersion liquid including:
a resin-coated pigment including a pigment and a resin dispersant that covers the pigment;
a polyoxyethylene-polyoxypropylene block copolymer; and water,
wherein the concentration of the pigment is 12% by mass or more with respect to the total mass of the pigment dispersion liquid.

According to a second aspect of the invention, there is provided a method of producing a pigment dispersion liquid, the method including:
a phase inversion emulsification process including:
   mixing and dispersing a pigment, a resin dispersant, water, and an organic solvent; and
   removing at least a part of the organic solvent and the water after the dispersing; and
adding a polyoxyethylene-polyoxypropylene block copolymer after the removing of at least a part of the organic solvent and the water.

### DETAILED DESCRIPTION OF THE INVENTION

Hereinafter, description is given to a pigment dispersion liquid, and a method of producing the same, and an ink composition of the invention.

### Pigment Dispersion Liquid and Production Method Thereof

The pigment dispersion liquid of the invention includes: a resin-coated pigment in which a pigment is coated with a resin dispersant; a polyoxyethylene-polyoxypropylene block copolymer; and water, wherein the concentration of the pigment is 12% by mass or more with respect to the total mass of the pigment dispersion liquid.
The pigment dispersion liquid, having the above configuration, has a high pigment concentration and excellent dispersion stability.

### Polyoxyethylene-polyoxypropylene Block Copolymer

The pigment dispersion liquid of the invention includes at least one polyoxyethylene-polyoxypropylene block copolymer (which may be simply referred to as "block copolymer" hereinafter). Since the pigment dispersion liquid contains the block copolymer, dispersion stability thereof is improved.
As the block copolymer to be used in the invention, any compound may be used without limitation, as long as the viscosity of an aqueous solution in which the block copolymer is dissolved is larger than the viscosity of water.
The block copolymer is preferably nonionic. When the block copolymer is an ionic (e.g., cationic or anionic) polymer compound, aggregation may occur owing to the interaction between the block copolymer and another dispersed material, leading to deterioration in storage stability of the pigment dispersion liquid, significant deterioration in jetting stability of an ink composition produced using the pigment dispersion liquid, and the like.

In addition, the block copolymer to be used in the invention is preferably watersoluble. Specifically, it is preferable that the block copolymer have solubility (at 25°C) of 1 g or more with respect to 100 g of water.
Examples of block copolymer include: NEWPOL PE series such as PE-61, PE-62, PE-64, PE-68, PE-71, PE-74, PE-75, PE-78, or PE-108 (all trade names, manufactured by Sanyo Chemical Industries Ltd.); and NEWCOL series such as NEWCOL 3240 or 3280 (all trade names, manufactured by Nippon Nyukazai Co., Ltd.).
From the viewpoint of stability of the pigment dispersion liquid, the number-average molecular weight of the block copolymer in the invention is preferably from 3,000 to 30,000, more preferably from 7,000 to 30,000, still more preferably from 9,000 to 30,000, particularly preferably from 10,000 to 30,000, and most preferably from 15,000 to 25.000.
A number-average molecular weight of 3,000 or more is preferable because a satisfactory effect in stabilization of the pigment dispersion liquid may be readily attained, and, when the block copolymer is used in an ink composition, the block copolymer does not cause deterioration of scratch resistance even when addition amount thereof is increased. Also, a number-average molecular weight of 30,000 or less is preferable in that the effect of imparting stability is attained even with a small amount of the block copolymer, and jetting property is not impaired. Moreover, the above ranges are preferable from the viewpoint of attaining both the jetting reliability (reliability of jetting of ink from an ink nozzle) and the scratch resistance when the pigment dispersion liquid is used for an ink composition.

The number-average molecular weight of the polyoxypropylene chain is preferably from 1,500 to 5,000, more preferably from 2,000 to 5,000, and most preferably from 3,000 to 4,500. The proportion of polyoxyethylene chains to the polyoxyethylene-polyoxypropylene copolymer is preferably 20% by mass or higher, more preferably 40% by mass or higher, and most preferably 75% by mass or higher.

The cloud point of the polyoxyethylene-polyoxypropylene block copolymer is preferably 50°C or higher, more preferably 75°C or higher, and most preferably 100°C or higher.
The solubility of the polyoxyethylene-polyoxypropylene block copolymer in water is preferably 1% by mass or higher, more preferably 5% by mass or higher, and most preferably 10% by mass or higher.

In the invention, single species of the block copolymer may be used, or two or more species thereof may be used.

The amount of the polyoxyethylene-polyoxypropylene block copolymer to be added is preferably, but not particularly limited to, from 0.5% by mass to 30% by mass, more preferably from 0.5% by mass to 27% by mass, still more preferably from 1% by mass to 27% by mass, particularly preferably from 1% by mass to 10% by mass, and most preferably from 1% by mass to 7% by mass, with respect to the pigment, from the viewpoint of storage stability of the pigment dispersion liquid.
An addition amount of 0.5% by mass or more is preferable in that the dispersion stability is significantly improved, and an addition amount of 30% by mass or less is preferable in that an increase in viscosity is suppressed while the dispersion stability is maintained.

### Pigment coated with Resin Dispersant

The pigment dispersion liquid of the invention includes at least one resin-coated pigment in which a pigment is coated with a resin dispersant. Accordingly, the pigment dispersion liquid of the invention has excellent dispersion stability.
The specific configuration of the resin-coated pigment used in the invention is not particularly limited as long as a part of the surface of a pigment or the entire surface of a pigment is coated with the resin dispersant according to the invention (which may be referred to as "water-insoluble resin" hereinafter).

The resin dispersant in the invention preferably contains a repetition unit having an acidic group, and the repetition unit having an acidic group is preferably within the scope of the hydrophilic structural unit (A) described in the following.

### Resin Dispersant

From the viewpoints of achieving stable dispersed state of the resin dispersant in a pigment dispersion liquid and an ink composition to be described below, suppressing adhesion and sedimentation of aggregates, and facilitating removal of adhered aggregates, it is preferable that the resin dispersant to be used in the invention includes one or more hydrophilic structural units (A) and one or more hydrophobic structural units (B), wherein: the content ratio of aromatic rings is 20% by mass or less with respect to the total mass of the resin dispersant; the hydrophobic structural units (B) include at least one structural unit represented by the following Formula (I); the proportion of the hydrophilic structural units (A) is 15% by mass or less with respect to the total mass of the resin dispersant; and the hydrophilic structural units (A) include at least a structural unit derived from (meth)acrylic acid.

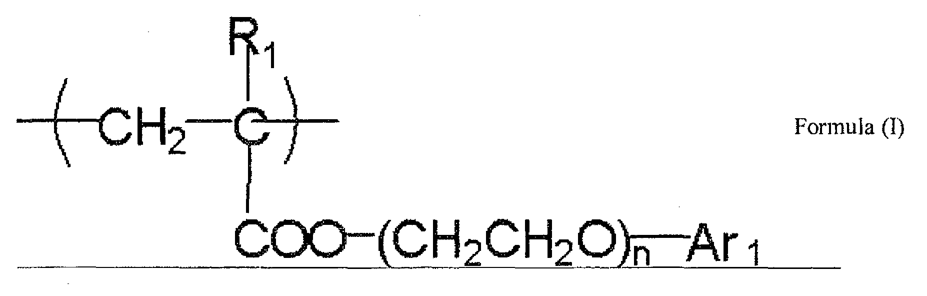

In Formula (I), R₁ represents a hydrogen atom or a methyl group, and preferably represents a methyl group.

In Formula (I); Ar₁ represents an unsubstituted or substituted aromatic ring. When Ar₁ represents a substituted aromatic ring, examples of a substituent on the aromatic ring include a halogen atom, an alkyl group, an alkoxy group, a hydroxyl group, and a cyano group, and substituents on the aromatic group may form a condensed ring together with the aromatic ring. Accordingly, Ar₁ may represent a condensed ring, of which examples include a condensed aromatic ring having 8 or more carbon atoms, a hetero ring to which an aromatic ring is condensed, and a ring formed by two or more linked aromatic rings.

"Condensed aromatic ring having 8 or more carbon atoms" is an aromatic compound having 8 or more carbon atoms, which is formed by condensation of two or more benzene rings, or which is formed of at least one type of aromatic ring and an aliphatic hydrocarbon that is bonded to the aromatic ring to form a condensed ring. Specific examples thereof include a naphthalene ring, an anthracene ring, a fluorene ring, a phenanthrene ring, and an acenaphthene ring.
"Hetero ring to which an aromatic ring is condensed" is a compound in which an aromatic compound having no hetero atom (preferably, a benzene ring) and a cyclic compound having a hetero atom are condensed to form a ring. The cyclic compound having a hetero atom is preferably a 5-membered ring or 6-membered ring. The hetero atom is preferably a nitrogen atom, an oxygen atom, or a sulfur atom. The cyclic compound having a hetero atom may have plural hetero atoms, the plural hetero atoms may be the same as or different from one another. Specific examples of the hetero ring to which an aromatic ring is condensed include phthalimide, acridone, carbazole, benzoxazole, and benzothiazole.
"Ring termed by two or more linked aromatic rings" is a compound in which two or more aromatic rings (preferably, benzene rings) are linked by a single bond, a divalent linking group or a trivalent linking group. The divalent linking group is preferably any divalent linking group selected from the group consisting of an alkylene group having 1 to 4 carbon atoms, -CO-, -O-, -S-, -SO-, -SO₂- and a combination thereof. Examples of the trivalent linking group include a methine group.
In this case, the ring formed by two or more linked aromatic rings may include plural linking groups that connect aromatic rings. The plural linking groups may be the same as or different from one another. The number of aromatic rings (benzene rings) is preferably 2 to 6, and more preferably 2 or 3. Specific examples of the compound having two or more linked aromatic rings (benzene rings) include biphenyl, triphenylmethane, diphenylmethane, diphenyl ether, and diphenyl sulfone.

The aromatic ring represented by Ar₁ binds to the main chain of the resin dispersant via the ester group and the ethylene oxide chain, and does not directly bind to the main chain. Therefore, an appropriate distance is kept between the hydrophobic aromatic ring and hydrophilic structural units, and the resin dispersant readily interacts with the pigment. Accordingly, the resin dispersant strongly adheres to the pigment, leading to an increase in dispersibility.
In particular, Ar₁ is preferably an unsubstituted or substituted benzene ring or an unsubstituted naphthalene ring, and particularly preferably an unsubstituted benzene ring.

In Formula (I), n indicates an average repetition number of ethylene oxide chain moieties of the resin dispersant of the resin-coated pigment included in the pigment dispersion liquid, and n preferably represents a number in a range of from I to 6, and preferably from 1 to 2.

Specific examples of the monomer that forms the structural unit represented by Formula (I) include phenoxyethyl (meth)acrylate and the following monomers.

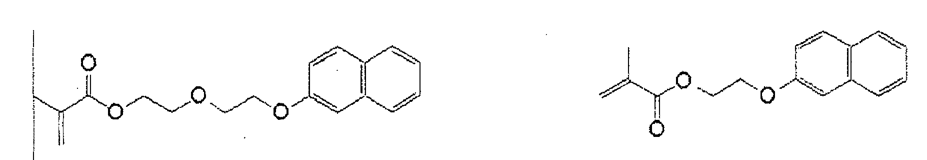

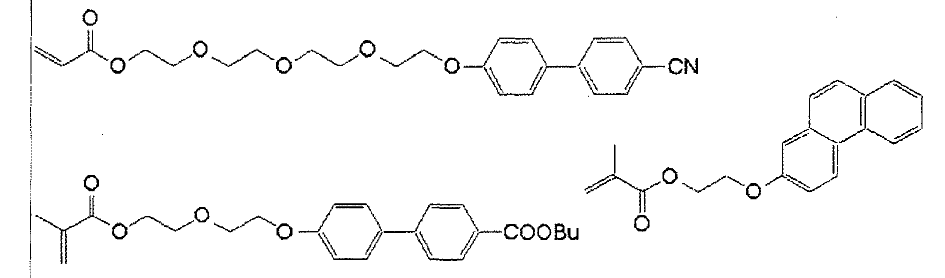

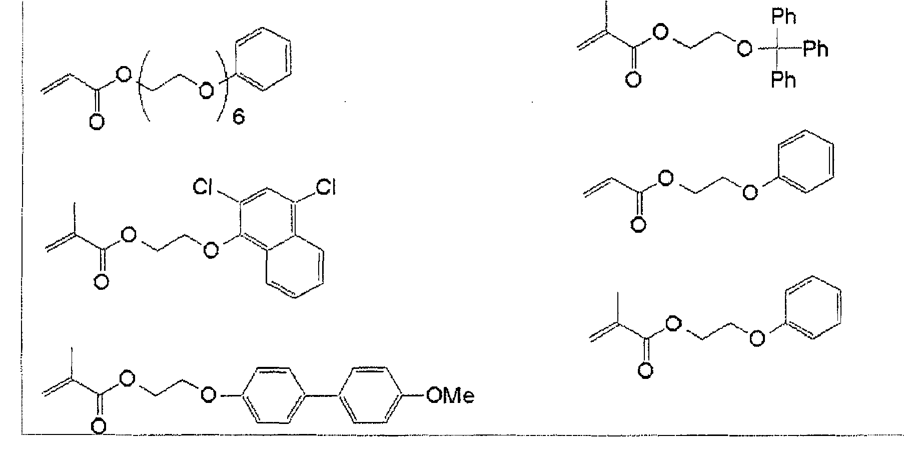

Of the structural units represented by Formula (I), a structural unit in which R₁ is a methyl group, Ar₁ is an unsubstituted benzene ring, and n is a number from 1 to 2 is preferable, from the viewpoint of dispersion stability.

The proportion of structural units represented by Formula (I) is preferably from 30 to 70% by mass, and more preferably from 45 to 50% by mass, with respect to the total mass of the resin dispersant. Excellent dispersibility is obtained when the proportion is 30% by mass or more, and, when the proportion is 70% by mass or less, adhesion and deposition of aggregations are suppressed and excellent removability (ease of maintenance) of adhered aggregates are achieved, leading to suppression of generation of image defects such as white spots.

Hereinafter, specific examples of the resin dispersant containing a structural unit represented by Formula (I) include, but are not limited to, those shown below. In the specific examples, "a", "b", and "c" denote the content ratios (mass%) of respective units.

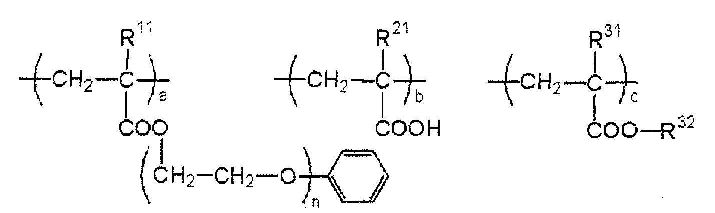

| | R¹¹ | n | R²¹ | R³¹ | R³² | a | b | c | Mw |
|---|---|---|---|---|---|---|---|---|---|
| A-1 | CH₃ | 1 | CH₃ | CH₃ | -CH₃ | 60 | 9 | 31 | 35500 |
| A-2 | CH₃ | 1 | CH₃ | CH₃ | -CH₃ | 60 | 10 | 30 | 41200 |
| A-3 | CH₃ | 1 | CH₃ | CH₃ | -CH₃ | 60 | 11 | 29 | 43500 |
| A-4 | CH₃ | 1 | CH₃ | CH₃ | -CH₃ | 60 | 12 | 28 | 37600 |
| A-5 | CH₃ | 1 | CH₃ | CH₃ | -CH₃ | 60 | 13 | 27 | 52400 |
| A-6 | CH₃ | 1 | CH₃ | CH₃ | -CH₃ | 55 | 8 | 37 | 82000 |
| A-7 | CH₃ | 1 | CH₃ | CH₃ | -CH₃ | 55 | 9 | 36 | 76500 |
| A-8 | CH₃ | 1 | CH₃ | CH₃ | -CH₃ | 55 | 10 | 35 | 38900 |
| A-9 | CH₃ | 1 | CH₃ | CH₃ | -CH₃ | 55 | 11 | 34 | 41500 |
| A-10 | CH₃ | 1 | CH₃ | CH₃ | -CH₃ | 55 | 12 | 33 | 37500 |
| A-11 | CH₃ | 1 | CH₃ | CH₃ | -CH₃ | 55 | 13 | 32 | 27600 |
| A-12 | CH₃ | 1 | CH₃ | CH₃ | -CH₃ | 55 | 14 | 31 | 18900 |
| A-13 | CH₃ | 1 | CH₃ | CH₃ | -CH₃ | 50 | 8 | 42 | 50400 |
| A-14 | CH₃ | 1 | CH₃ | CH₃ | -CH₃ | 50 | 9 | 41 | 41300 |
| A-15 | CH₃ | 1 | CH₃ | CH₃ | -CH₃ | 50 | 10 | 40 | 39800 |
| A-16 | CH₃ | 1 | CH₃ | CH₃ | -CH₃ | 50 | 11 | 39 | 37900 |
| A-17 | CH₃ | 1 | CH₃ | CH₃ | -CH₃ | 50 | 12 | 38 | 42500 |
| A-18 | CH₃ | 1 | CH₃ | CH₃ | -CH₃ | 50 | 13 | 37 | 41900 |
| A-19 | CH₃ | 1 | CH₃ | CH₃ | -CH₃ | 50 | 14 | 36 | 62500 |
| A-20 | CH₃ | 1 | CH₃ | CH₃ | -CH₃ | 50 | 15 | 35 | 75400 |
| A-21 | CH₃ | 1 | CH₃ | CH₃ | -CH₃ | 45 | 8 | 47 | 19800 |
| A-22 | CH₃ | 1 | CH₃ | CH₃ | -CH₃ | 45 | 9 | 46 | 45200 |
| A-23 | CH₃ | 1 | CH₃ | CH₃ | -CH₃ | 45 | 10 | 45 | 37500 |
| A-24 | CH₃ | 1 | CH₃ | CH₃ | -CH₃ | 45 | 11 | 44 | 75040 |
| A-25 | CH₃ | 1 | CH₃ | CH₃ | -CH₃ | 45 | 12 | 43 | 54200 |
| A-26 | CH₃ | 1 | CH₃ | CH₃ | -CH₃ | 45 | 13 | 42 | 23400 |
| A-27 | CH₃ | 1 | CH₃ | CH₃ | -CH₂CH₃ | 55 | 9 | 36 | 75010 |
| A-28 | CH₃ | 1 | CH₃ | CH₃ | -CH₂CH₃ | 55 | 10 | 35 | 54300 |
| A-29 | CH₃ | 1 | CH₃ | CH₃ | -CH₂CH₃ | 55 | 11 | 34 | 25000 |
| A-30 | CH₃ | 1 | CH₃ | CH₃ | -CH₂CH₃ | 55 | 12 | 33 | 45000 |
| A-31 | CH₃ | 1 | CH₃ | CH₃ | -CH₂CH3 | 55 | 13 | 32 | 37500 |
| A-32 | CH₃ | 1 | CH₃ | CH₃ | -CH₂CH₃ | 55 | 14 | 31 | 34500 |
| A-33 | CH₃ | 1 | CH₃ | CH₃ | -CH₂CH₃ | 50 | 8 | 42 | 29800 |

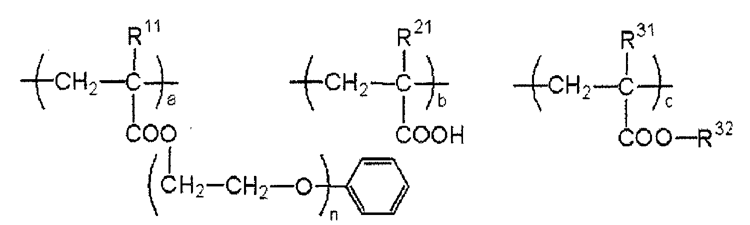

| | R¹¹ | n | R²¹ | R³¹ | R³² | a | b | c | Mw |
|---|---|---|---|---|---|---|---|---|---|
| A-34 | CH₃ | 1 | CH₃ | CH₃ | -CH₂CH₃ | 50 | 9 | 41 | 45300 |
| A-35 | CH₃ | 1 | CH₃ | CH₃ | -CH₂CH₃ | 50 | 10 | 40 | 51200 |
| A-36 | CH₃ | 1 | CH₃ | CH₃ | -CH₂CH₃ | 50 | 11 | 39 | 44500 |
| A-37 | CH₃ | 1 | CH₃ | CH₃ | -CH₂CH₃ | 50 | 12 | 38 | 27560 |
| A-38 | CH₃ | 1 | CH₃ | CH₃ | -CH₂CH₃ | 50 | 13 | 37 | 84200 |
| A-39 | CH₃ | 1 | CH₃ | CH₃ | -CH₂CH₃ | 50 | 14 | 36 | 76500 |
| A-40 | H | 1 | H | H | -CH₂CH₃ | 69 | 10 | 21 | 41200 |
| A-41 | H | 1 | H | H | -CH₂CH₃ | 69 | 11 | 20 | 37800 |
| A-42 | H | 1 | H | H | -CH₂CH₃ | 69 | 12 | 19 | 39800 |
| A-43 | H | 1 | H | H | -CH₂CH₃ | 50 | 11 | 39 | 42000 |
| A-44 | H | 1 | H | H | -CH₂CH₃ | 45 | 11 | 44 | 48900 |
| A-45 | H | 1 | H | H | -CH₂CH₃ | 45 | 12 | 43 | 43600 |
| A-46 | CH₃ | 2 | CH₃ | CH₃ | -CH₃ | 70 | 11 | 19 | 68000 |
| A-47 | CH₃ | 2 | CH₃ | CH₃ | -CH₃ | 60 | 11 | 29 | 34600 |
| A-48 | CH₃ | 2 | CH₃ | CH₃ | -CH₃ | 50 | 11 | 39 | 51200 |
| A-49 | CH₃ | 2 | CH₃ | GH₃ | -CH₃ | 70 | 10 | 20 | 49800 |
| A-50 | CH₃ | 2 | CH₃ | CH₃ | -CH₃ | 70 | 12 | 18 | 68000 |
| A-51 | CH₃ | 4 | CH₃ | CH₃ | -CH₂(CH₃)CH₃ | 70 | 7 | 23 | 72000 |
| A-52 | H | 5 | H | H | -OH₃ | 70 | 10 | 20 | 86000 |
| A-53 | H | 5 | H | H | -CH₂CH(CH₃)CH₃ | 70 | 2 | 28 | 42000 |

| | | Mw |
|---|---|---|
| A-54 | 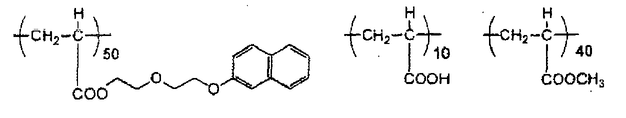 | 72400 |
| A-55 | 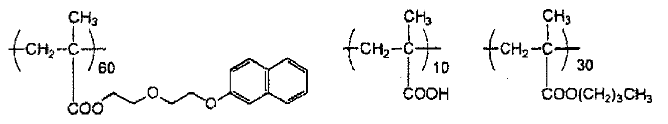 | 33800 |
| A-56 | 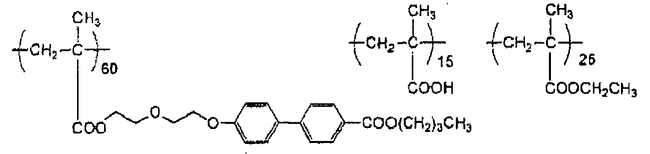 | 39200 |

The numerical values described for monomers in the resin dispersant structures denote content ratios (mass%) of respective units.

It is preferable that the resin dispersant of the invention further include a structural unit represented by the following formula (II), in addition to the structural unit represented by Formula (I) above.

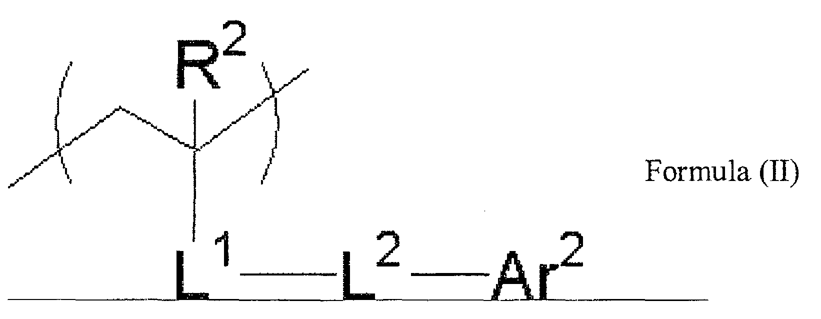

In Formula (II), R² represents a hydrogen atom or a methyl group; L¹ represents a substituted or unsubstituted phenylene group; L² represents single bond or a divalent linking group; and Ar² represents a monovalent group derived from a condensed aromatic ring having 8 or more carbon atoms, a hetero ring to which an aromatic ring is condensed, or an aromatic ring formed by two or more linked benzene rings.

In Formula (II), R² represents a hydrogen atom or a methyl group, and preferably a methyl group.

L¹ represents a substituted or unsubstituted phenylene group, and preferably an unsubstituted phenylene group.
L² represents a single bond or a divalent linking group. The divalent linking group is preferably a linking group having 1 to 30 carbon atoms, more preferably a linking group having 1 to 25 carbon atoms, still more preferably a linking group having 1 to 20 carbon atoms, and particularly preferably a linking group having I to 15 carbon atoms.
L² most preferably represents an alkyleneoxy group having 1 to 25 carbon atoms (and more preferably 1 to 10 carbon atoms), an imino group (-NH-), a sulfamoyl group, a divalent linking group containing an alkylene group, such as an alkylene group having 1 to 20 carbon atoms (and more preferably 1 to 15 carbon atoms), or an ethylene oxide group (-(CH₂CH₂O)ₙ-, wherein n = 1 to 6), a group formed by combining at least two types selected from these linking groups, or the like.

Ar² represents a monovalent group derived from a condensed aromatic ring having 8 or more carbon atoms, a hetero ring to which an aromatic ring is condensed, or an aromatic ring formed by two or more linked benzene rings.

"Condensed aromatic ring having 8 or more carbon atoms" is an aromatic compound having 8 or more carbon atoms, which is formed by condensation of two or more benzene rings, or which is formed of at least one aromatic ring and an aliphatic hydrocarbon that is bonded to the aromatic ring to form a condensed ring.
Specific examples thereof include a naphthalene ring, an anthracene ring, a fluorene ring, a phenanthrene ring, and an acenaphthene ring.

"Hetero ring to which an aromatic ring is condensed" is a compound in which an aromatic compound having no hetero atom (preferably, a benzene ring) and a cyclic compound having a hetero atom are condensed to form a ring. The cyclic compound having a hetero atom is preferably a 5-membered ring or a 6-membered ring. The hetero atom is preferably a nitrogen atom, an oxygen atom, or a sulfur atom. The cyclic compound having a hetero atom may have plural hetero atoms, and the plural hetero atoms may be the same as or different from one another.
Specific examples of the hetero ring to which an aromatic ring is condensed include phthalimide, acridone, carbazole, benzoxazole, and benzothiazole.
"Monovalent group derived from an aromatic ring formed by two or more linked benzene rings" is a group derived by eliminating one atom from a compound having two or more linked benzene rings.
"Compound having two or more linked benzene rings" is a compound in which two or more benzene rings are linked by a single bond or a divalent linking group or a trivalent linking group. The divalent linking group is preferably any divalent linking group selected from the group consisting of an alkylene group having 1 to 4 carbon atoms, -CO-, -O-, -S-, - SO-, -SO₂-, and a combination thereof. Examples of the trivalent linking group include a methine group.
In this case, the compound having two or more linked benzene rings may include plural linking groups that connect benzene rings, and the plural linking groups may be the same as or different from one another. The number of benzene rings is preferably 2 to 6, and more preferably 2 or 3. Specific examples of the compound having two or more linked benzene rings include biphenyl, triphenylmethane, diphenylmethane, diphenyl ether, and diphenyl sulfone.

Specific examples of the monomer that forms the structural unit represented by Formula (II) include the following monomers, but not limited to these.

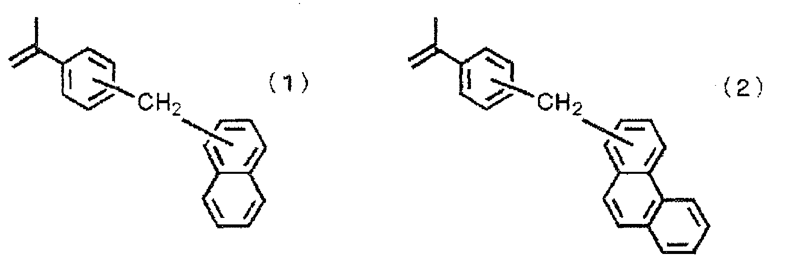

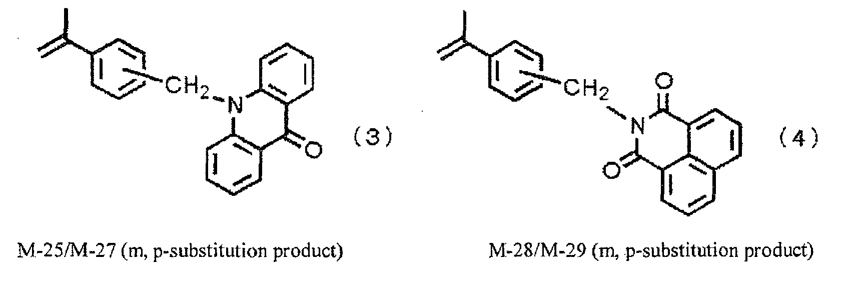

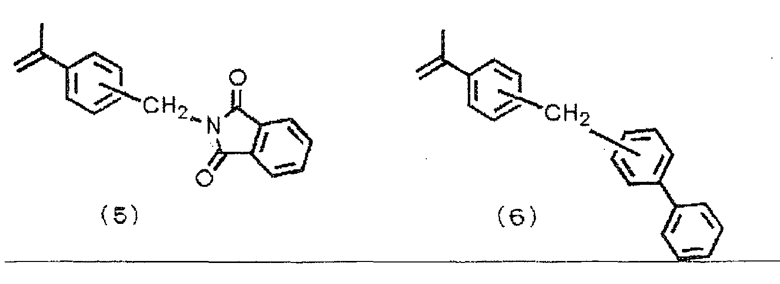

In the structural unit represented by Formula (II), Ar² is preferably a monovalent group derived from acridone or phthalimide from the viewpoint of stability of coated pigments, and more preferably a monovalent group derived from acridone.
Of the structural units represented by Formula (II), a structural unit in which R² is a methyl group, L¹ is an unsubstituted phenylene group, L² is a divalent linking group (preferably, a ethylene group), and Ar² is a monovalent group derived from acridone is preferable from the viewpoint of dispersion stability of the pigment.

The proportion of structural units represented by Formula (II) is preferably from 5 to 25% by mass, and more preferably from 10 to 18% by mass, with respect to the total mass of the resin dispersant.
A proportion of 5% by mass or more is preferable in that tendency to suppress generation of image defects such as white spots or the like to a significant extent is increased, and a proportion of 25% by mass or less is preferable in that tendency to suppress a problem in production, which is caused by a decrease in solubility of the copolymer in a polymerization reaction solution (e.g., methyl ethyl ketone), is increased.

Hereinafter, specific examples of the resin dispersant containing a structural unit represented by Formula (II) are listed. However, the resin dispersant is not limited to these.

**Table 1**

| | Structure | | | Mass ratio (%) | | | Mw |
|---|---|---|---|---|---|---|---|
| | Monomer 1 | Momomer 2 | Monomer 3 | Monomer 1 | Monomer 2 | Monomer 3 | |
| B-1 | M-25/M-27 | Methyl methacrylate | Methacrylic acid | 5 | 87 | 8 | 42500 |
| B-2 | M-25/M-27 | Methyl methacrylate | Methacrylic acid | 5 | 85 | 10 | 28400 |
| B-3 | M-25/M-27 | Methyl methacrylate | Methacrylic acid | 5 | 83 | 12 | 34500 |
| B-4 | M-25/M-27 | Methyl methacrylate | Methacrylic acid | 5 | 81 | 14 | 62870 |
| B-5 | M-25/M-27 | Methyl methacrylate | Methacrylic acid | 10 | 82 | 8 | 24500 |
| B-6 | M-25/M-27 | Methyl methacrylate | Methacrylic acid | 10 | 81 | 9 | 19800 |
| B-7 | M-25/M-27 | Methyl methacrylate | Methacrylic acid | 10 | 80 | 10 | 75200 |
| B-8 | M-25/M-27 | Methyl methacrylate | Methacrylic acid | 10 | 79 | 11 | 81500 |
| B-9 | M-25/M-27 | Methyl methacrylate | Methacrylic acid | 10 | 78 | 12 | 27500 |
| B-10 | M-25/M-27 | Methyl methacrylate | Methacrylic acid | 15 | 77 | 8 | 56800 |
| B-11 | M-25/M-27 | Methyl methacrylate | Methacrylic acid | 15 | 76 | 9 | 48600 |
| B-12 | M-25/M-27 | Methyl methacrylate | Methacrylic acid | 15 | 75 | 10 | 41200 |
| B-13 | M-25/M-27 | Methyl methacrylate | Methacrylic acid | 15 | 74 | 11 | 39800 |
| B-14 | M-25/M-27 | Methyl methacrylate | Methacrylic acid | 15 | 73 | 12 | 34500 |
| B-15 | M-25/M-27 | Methyl methacrylate | Methacrylic acid | 15 | 72 | 13 | 31500 |
| B-16 | M-25/M-27 | Methyl methacrylate | Methacrylic acid | 15 | 71 | 14 | 42500 |
| B-17 | M-25/M-27 | Ethyl methacrylate | Methacrylic acid | 5 | 87 | 8 | 65000 |
| B-18 | M-25/M-27 | Ethyl methacrylate | Methacrylic acid | 5 | 85 | 10 | 89800 |
| B-19 | M-25/M-27 | Ethyl methacrylate | Methacrylic acid | 5 | 83 | 12 | 98000 |
| B-20 | M-25/M-27 | Ethyl methacrylate | Methacrylic acid | 5 | 81 | 14 | 15400 |
| B-21 | M-25/M-27 | Ethyl methacrylate | Methacrylic acid | 10 | 82 | 8 | 28500 |

**Table 2**

| | Structure | | | Mass ratio (%) | | | Mw |
|---|---|---|---|---|---|---|---|
| | Monomer 1 | Monomer 2 | Monomer 3 | Monomer 1 | Monomer 2 | Monomer 3 | |
| B-22 | M-25/M-27 | Ethyl methacrylate | Methacrylic acid | 10 | 81 | 9 | 37500 |
| B-23 | M-25/M-27 | Ethyl methacrylate | Methacrylic acid | 10 | 80 | 10 | 45000 |
| B-24 | M-25/M-27 | Ethyl methacryhte | Methacrylic acid | 10 | 79 | 11 | 46500 |
| B-25 | M-25/M-27 | Ethyl methacrylate | Methacrylic acid | 10 | 78 | 12 | 47500 |
| B-26 | M-25/M-27 | Ethyl methacrylate | Methacrylic acid | 15 | 77 | 8 | 31500 |
| B-27 | M-25/M-27 | Ethyl methacrylate | Methacrylic acid | 15 | 76 | 9 | 19800 |
| B-28 | M-25/M-27 | Ethyl methacrylate | Methacrylic acid | 15 | 75 | 10 | 34500 |
| B-29 | M-25/M-27 | Ethyl methacrylate | Methacrylic and | 15 | 74 | 11 | 45000 |
| B-30 | M-25/M-27 | Ethyl methacrylate | Methacrylic acid | 15 | 73 | 12 | 65000 |
| B-31 | M-25/M-27 | Ethyl methacrylate | Methacrylic acid | 15 | 72 | 13 | 61200 |
| B-32 | M-25/M-27 | Ethyl methacrylate | Methacrylic acid | 15 | 71 | 14 | 45000 |
| B-33 | M-25/M-27 | Butyl methacrylate | Methacrylic acid | 5 | 87 | 8 | 46500 |
| B-34 | M-25/M-27 | Butyl methacrylate | Methacrylic acid | 5 | 83 | 12 | 34800 |
| B-35 | M-25/M-27 | Butyl methacrylate | Methacrylic acid | 10 | 81 | 9 | 36500 |
| B-36 | M-25/M-27 | Butyl methacrylate | Methacrylic acid | 10 | 79 | 11 | 38900 |
| B-37 | M-25/M-27 | Butyl methacrylate | Methacrylic acid | 15 | 76 | 9 | 27500 |
| D-38 | M-25/M-27 | Butyl methacrylate | Methacrylic acid | 15 | 75 | 10 | 29800 |
| B-39 | M-25/M-27 | Butyl methacrylate | Methacrylic acid | 15 | 74 | 11 | 37800 |
| B-40 | M-28/M-29 | Methyl methacrylate | Methacrylic acid | 5 | 85 | 10 | 39800 |
| B-41 | M-28/M-29 | Methyl methacrylate | Methacrylic acid | 10 | 80 | 10 | 41500 |
| B-42 | M-28/M-29 | Methyl methacrylate | Methacrylic acid | 12 | 78 | 10 | 40000 |

**Table 3**

| | Structure | | | Mass ratio (%) | | | Mw |
|---|---|---|---|---|---|---|---|
| | Monomer 1 | Monomer 2 | Monomer 3 | Monomer 1 | Monomer 2 | Monomer 3 | |
| B-43 | M-28/M-29 | Methyl methacrylate | Methacrylic acid | 15 | 75 | 10 | 38900 |
| B-44 | M-28/M-29 | Ethyl methacrylate | Methacrylic acid | 7 | 82 | 11 | 37500 |
| B-45 | M-28/M-29 | Ethyl methacrylate | Methacrylic acid | 9 | 80 | 11 | 28900 |
| B-46 | M-28/M-29 | Ethyl methacrylate | Methacrylic acid | 12 | 77 | 11 | 26500 |
| B-47 | M-28/M-29 | Ethyl methacrylate | Methacrylic acid | 15 | 74 | 11 | 59000 |
| B-48 | M-25/M-27 | Methyl methacrytate | Acrylic acid | 14 | 78 | 8 | 57600 |
| B-49 | M-25/M-27 | Ethyl methacrylate | Acrylic acid | 14 | 76 | 10 | 53500 |
| B-50 | M-25/M-27 | Butyl methacrylate | Acrylic acid | 13 | 76 | 11 | 42500 |

The resin dispersant used in the present invention is preferably a resin that includes one or more hydrophilic structural units (A) and one or more hydrophobic structural units (B), and in which the content ratio of aromatic rings is 20% by mass, and more preferably from 10% by mass to 20% by mass, with respect to the total mass of the resin dispersant, from the viewpoints that the resin dispersant can maintain stable dispersed state in a pigment dispersion liquid and an ink composition and can suppress the adhesion or deposition of aggregates, and that adhered aggregates can be easily removed.
The hydrophobic structural units (B) preferably include at least one structural unit represented by Formula (I).

In addition to the structural unit represented by Formula (I) and the structural unit represented by Formula (II), the resin dispersant may additionally include a hydrophobic structural unit (B) other than structural units represented by Formula (I) or Formula (II). Examples of the additional hydrophobic structural unit (B) include a structural unit derived from a vinyl monomer such as a (meth)acrylate, a (meth)acrylamide, a styrenic compound, or a vinyl ester, and a hydrophobic structural unit having an aromatic ring bonded to an atom in the main chain via a linking group, which are not hydrophilic structural units (A) (i.e., which do not have a hydrophilic functional group, for example). One of the structural units may be used singly, or a combination of two or more thereof may be used.

Examples of (meth)acrylates include methyl (meth)acrylate, ethyl(meth)acrylate, butyl (metll)acrylate, isobutyl (ineth)acrylate, and hexyl (meth)acrylate. Of these, methyl(meth)acrylate, ethyl (meth)acrylate, and butyl (meth)acrylate are preferable, and methyl(meth)acrylate and ethyl (meth)acrylate are particularly preferable.
Examples of (meth)acrylamides include N-cyclohexyl(meth)acrylamide, N-(2-methoxyethyl) (meth)acrylamide, N,N-diallyl(meth)acrylamide, and N-allyl(meth)acrylamide.
Examples of styrenic compounds include styrene, methylstyrene, dimethylstyrene, trimethylstyrene, ethylstyrene, isopropylstyrene, n-butylstyrene, tert-butylstyrene, methoxystyrene, butoxystyrene, acetoxystyrene, chlorostyrene, dichlorostyrene, bromostyrene, chloromethylstyrene, hydroxystyrene protected by a group capable of deprotection (e.g., t-Boc) by an acidic substance, methyl vinylbenzoate, α-methylstyrene, and vinlynaphthalene. Of these, styrene and α-methylstyrene are preferable.
Examples of vinyl esters include vinyl acetate, vinyl chloroacetate, vinyl propionate, vinyl butyrate, vinyl methoxy acetate, and vinyl benzoate. Of theses, vinyl acetate is preferable.

"Hydrophobic structural unit having an aromatic ring bonded to an atom in the main chain via a linking group" is preferably contained such that the content ratio, in the copolymer, of aromatic rings each of which is bonded to an atom in the main chain of the copolymer via a linking group is preferably from 15 to 27% by mass, more preferably from 15 to 25% by mass, and still more preferably from 15 to 20% by mass, relative to the mass of the copolymer.
The aromatic ring is bonded to an atom in the main chain of a copolymer via a linking group, and is not directly bonded to the atom in the main chain of the copolymer; therefore, an appropriate distance may be kept between the hydrophobic aromatic ring and hydrophilic structural units. Accordingly, the copolymer is likely to interact with the pigment and is strongly adsorbed onto the pigment, leading to further improvement in dispersibility.

Examples of "hydrophobic structural unit having an aromatic ring bonded to an atom in the main chain via a linking group", other than structural units represented by Formula (I) or Formula (II), include a structural unit represented by the following Formula (III).

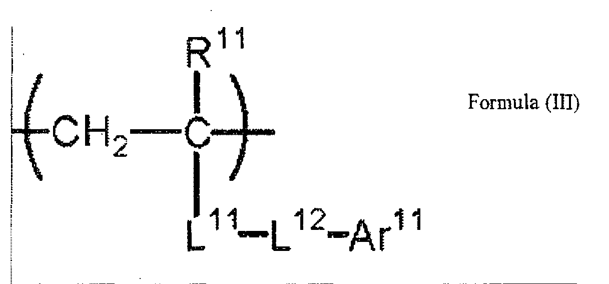

In Formula (III), R¹¹ represents a hydrogen atom, a methyl group, or a halogen atom; L¹¹ represents *-COO-, *-OCO-, *-CONR¹²-, or *-O-, and R¹² represents a hydrogen atom or an alkyl group having 1 to 10 carbon atoms. The symbol * in the groups represented by L¹¹ denotes a binding to which the main chain of the copolymer is linked.

L¹² represents a single bond or a divalent linking group having 1 to 30 carbon atoms, preferably a divalent linking group having 1 to 25 carbon atoms, more preferably a divalent linking group having 1 to 20 carbon atoms, and still more preferably a divalent linking group having 1 to 15 carbon atoms.
Specifically, particularly preferable examples of L¹² include: an imino group (-NH-); a sulfamoyl group; a divalent linking group containing an alkyl group, such as an alkylene group having 1 to 20 carbon atoms (more preferably 1 to 15 carbon atoms), or an ethylene oxide group [-(CH₂CH₂O)ₙ-, n = 1 to 6]; and a group formed by a combination of two or more types selected from these groups.

In Formula (III), Ar¹¹ represents a monovalent group derived from an aromatic ring.
Examples of the aromatic ring from which the monovalent group represented by Ar¹¹ is derived include, but not particularly limited, a benzene ring, a condensed aromatic ring having 8 or more carbon atoms, a hetero ring formed from condensed aromatic rings, and an aromatic ring formed from two or more linked benzene rings. Details of the condensed aromatic ring having 8 or more carbon atoms and the hetero ring formed from condensed aromatic rings are as described above.

In the following, specific examples of the monomer which can form the additional hydrophobic structural unit are shown, but not limited to those.

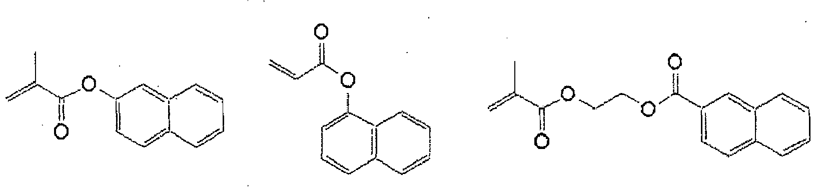

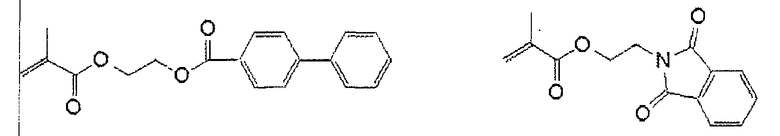

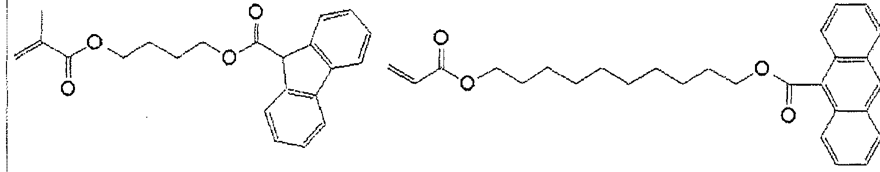

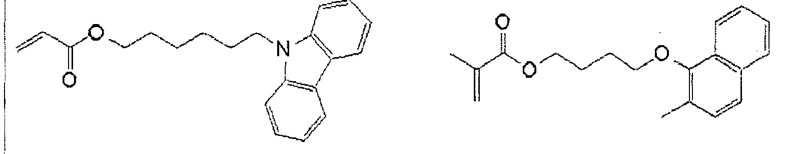

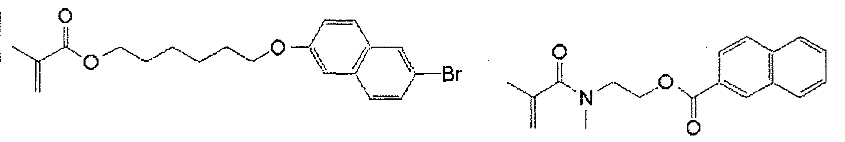

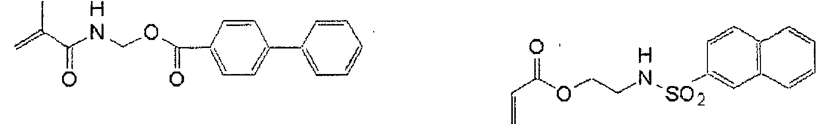

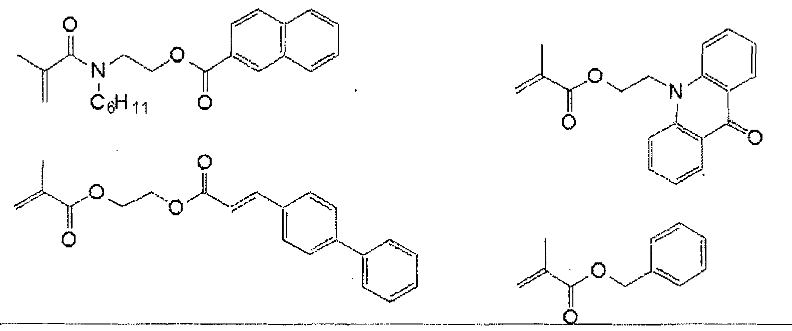

As a hydrophilic structural unit (A), a structural unit derived, for example, from acrylic acid or methacrylic acid is preferable, and it is preferable that the resin dispersant contain acrylic acid or methacrylic acid or both. Examples of other hydrophilic structural units (A) include a structural unit derived from a monomer having a nonionic hydrophilic group, and specific examples thereof include vinyl monomers having a hydrophilic functional group, such as (meth)acrylates having a hydrophilic functional group, (meth)acrylamides having a hydrophilic functional group, and vinyl esters.

Examples of "hydrophilic functional group" include a hydroxyl group, an amino group, an amide group (in which the nitrogen atom is not substituted), and alkylene oxides such as polyethylene oxide or polypropylene oxide, which are described below.

The monomer that forms a hydrophilic structural unit having a nonionic hydrophilic group is not particularly limited as long as the monomer has a nonionic hydrophilic functional group and a functional group capable of polymerization such as an ethylenic unsaturated bond, and may be selected from known monomers. Specific examples of the monomer include hydroxyethyl (meth)acrylate, hydroxybutyl (meth)acrylate, (meth)acrylamide, aminoethyl acrylate, aminopropyl acrylate, and a (meth)acrylate having an alkylene oxide polymer.

The hydrophilic structural unit (A) having a nonionic hydrophilic group may be formed by polymerization involving corresponding monomer(s), or may be formed by introducing a hydrophilic functional group to a polymer chain after the formation of the polymer chain by polymerization.

The hydrophilic structural unit having a nonionic hydrophilic group is preferably a hydrophilic structural unit having an alkylene oxide structure. From the viewpoint of hydrophilicity, the alkylene oxide structure preferably has an alkylene moiety having 1 to 6 carbon atoms, more preferably 2 to 6 carbon atoms, and particularly preferably 2 to 4 carbon atoms. The polymerization degree of the alkylene oxide structure is preferably from 1 to 120, more preferably from 1 to 60, and particularly preferably from 1 to 30.

In an embodiment, the hydrophilic structural unit having a nonionic hydrophilic group is preferably a hydrophilic structural unit having a hydroxyl group. The number of hydroxyl groups included in the structural unit is not particularly limited, but is preferably from 1 to 4, more preferably from 1 to 3, and particularly preferably from 1 to 2, from the viewpoints of hydrophilicity of the resin dispersant, and compatibility with the solvent used in polymerization or other monomers.

In the above, the proportion of hydrophilic structural units, for example, varies depending on the proportion of the hydrophobic structural units (B). For example, when the resin dispersant is composed only from acrylic acid and/or methacrylic acid (as the hydrophilic structural unit (A)) and the one or more hydrophobic structural units (B), the proportion of the acrylic acid and/or methacrylic acid may be determined by the expression: "100 - (mass% of the hydrophobic structural units)".

In the resin dispersant to be used in the invention, the compositional ratio of the hydrophilic structural units (A) to the hydrophobic structural units (B) (including the structural unit represented by Formula (I), the structural unit represented by Formula (II), and structural unit represented by Formula (III)) varies depending on the degree of hydrophilicity or hydrophobicity of the respective structural units. It is preferable that the proportion of the hydrophilic structural units (A) is 15% by mass or less with respect to the total mass of the resin dispersant, and the proportion of the hydrophobic structural units (B) is more than 80% by mass, and more preferably 85% or more, with respect to the total mass of the resin dispersant.
When the content of the hydrophilic structural unit (A) is 15% by mass or less, the amount of components that dissolve by themselves in an aqueous medium is reduced, and various properties such as dispersibility of the pigment are improved, and favorable ink jetting property can be attained when inkjet recording is carried out.

The proportion of the hydrophilic structural units (A) is preferably from more than 0% by mass to 15% by mass, more preferably from 3 to 15% by mass, still more preferably from 3 to 13% by mass, and particularly preferably from 8 to 13% by mass, with respect to the total mass of the resin dispersant.

A single species of hydrophilic structural unit (A) may be used, or a mixture of two or more species thereof may be used.

Among them, it is preferable that, in the resin dispersant, the one or more hydrophilic structural units (A) include (meth)acrylic acid, and the one or more hydrophobic structural units (B) include at least one of (i) a structural unit represented by Formula (I) (preferably a structural unit derived from phenoxyethyl (meth)acrylate) or (ii) a structural unit represented by Formula (II) (preferably a structural unit derived from M-25/M-27 or M-28/M-29 described above).
In particular, it is preferable that, in the resin dispersant, the one or more hydrophilic structural units (A) include (meth)acrylic acid, and the hydrophobic structural units (B) include at least one of the above (i) or (ii) and, further, (iii) a hydrophobic structural unit (B) other than the above (i) and (ii) (preferably methyl (meth)acrylate or ethyl (meth)acrylate).

The acid value of the resin dispersant is preferably from 30 mgKOH/g to 97.8 mgKOH/g, more preferably from 30 mgKOH/g to 85 mgKOH/g, and particularly preferably from 50 mgKOH/g to 85 mgKOH/g, from the viewpoints of pigment dispersibility and storage stability.
Herein, the acid value is defined as the mass (mg) of KOH required for completely neutralizing 1 g of the resin dispersant, which is measured by the method according to JIS K0070 (1992).

The weight-average molecular weight (Mw) of the resin dispersant is preferably 30,000 or more, more preferably from 30,000 to 150,000, still more preferably from 30,000 to 100,000, and particularly preferably from 30,000 to 80,000. When the weight-average molecular weight is 30,000 or more, steric repulsion effect as a dispersant tends to be favorable, and dispersion stability is improved.
The number-average molecular weight (Mn) of the resin dispersant is preferably from about 1.000 to about 100,000, and particularly preferably from about 3,000 to about 50,000. When the number-average molecular weight is within the above ranges, the resin dispersant exerts functions as a coating film for a pigment or as a coating film to be formed by an ink composition. The resin dispersant is preferably used in the form of a salt of an alkali metal or an organic amine.

The molecular weight distribution (weight-average molecular weight/number-average molecular weight) of the resin dispersant is preferably from 1 to 6, and more preferably from 1 to 4. When the molecular weight distribution is within the above ranges, the dispersion stability of the pigment dispersion liquid, and the dispersion stability and jetting stability of an ink composition containing the pigment dispersion liquid can be improved.

Each of number-average molecular weight and weight-average molecular weight is a molecular weight as measured using polystyrene as a standard, with a GPC analyzer with TSKgel GMHxL, TSKgel G4000HxL, and TSKgel G2000HxL columns (trade name, manufactured by Tosoh Corporation) and a differential refractometer and using THF as a solvent.

The resin dispersant may be produced by any one of various synthesis methods such as solution polymerization, precipitation polymerization, suspension polymerization, bulk polymerization, or emulsion polymerization. The polymerization reaction may be carried out by a known operation of batch system, semi-continuous system, continuous system, or the like. The polymerization may be initiated using a radial initiator, by irradiation of light or radiation, or the like. The polymerization methods and initiation methods are described, for example, in Teiji Tsuruta, "Kobunshi Gosei Houhou" (revision), The Nikkan Kogyo Shinbun, Ltd. (1971), or Takayuki Ootsu and Masayoshi Kinoshita, "Kobunshi Gosei no Jikkenhou", Kagaku-Dojin Publishing Company Ltd., pp. 124-154, 1972.
Of the polymerization methods, solution polymerization in which a radical initiator is used is preferable. Examples of the solvent used in the solution polymerization include various organic solvents such as ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, ethylene chloride, chloroform, dichloroethane, methanol, ethanol, 1-propanol, 2-propanol, and 1-butanol. Single species of the solvent may be used, or a combination of two or more thereof may be used. Alternatively, a mixed solvent composed of water and at least one organic solvent, which may be selected from the above, may be used. The polymerization temperature should be set in connection with the molecular weight of the polymer to be produced, the type of the initiator, and the like, and is generally from about 0°C to about 100°C, and preferably from 50°C to 100°C. The reaction pressure may be arbitrary selected, but is generally from I to 100 kg/cm , and particularly preferably from about 1 to about 30 kg/cm². The reaction time may be from about 5 hours to about 30 hours. The obtained resin may be subjected to purification such as reprecipitation.

### Pigment

The pigment to be used in the invention is not particularly limited and may be appropriately selected in accordance with the purpose. Examples of the pigment include organic pigments and inorganic pigments.

Examples of the organic pigments include azo pigments, polycyclic pigments, dye chelates, nitro pigments, nitroso pigments, and aniline black. Of these, azo pigments and polycyclic pigments are more preferable.
Examples of the azo pigments include azo lake, insoluble azo pigments, condensed azo pigments, and chelate azo pigments.
Among these, azo yellow pigments are preferable from the viewpoint of color hue.
Examples of the azo yellow pigments include C.I. Pigment Yellow 3, 14, 55, 74,83, 95, and 152, and C.I. Pigment Yellow 74 is particularly preferable.
Examples of the polycyclic pigments include phthalocyanine pigments, perylene pigments, perinone pigments, anthraquinone pigments, quinacridone pigments, dioxazine pigments, indigo pigments, thioindigo pigments, isoindolinone pigments, and quinophthalone pigment.
Examples of the dye chelates include basic dye chelates and acidic dye chelates.

Examples of the inorganic pigments include titanium oxide, iron oxide, calcium carbonate, barium sulfate, aluminum hydroxide, barium yellow, cadmium red, chrome yellow, and carbon black. Of these, carbon black is particularly preferable. Examples of the carbon black include those produced by a known method such as contact method, furnace method, or thermal method.

In the invention, a single species of pigment may be used, or a combination of plural species thereof, which may be selected from the same group or different groups among the above pigment groups, may be used.

The ratio (p:r) of the pigment (p) to the resin dispersant (r) used in the invention in weight ratio is preferably from 100:15 to 100:140, and more preferably from 100:15 to 100:50. Regarding the ratio (p:r), the dispersion stability and scratch resistance tend to be improved when the amount of the resin dispersant is 15 parts by weight or more with respect to 100 parts by weight of the pigment, and the dispersion stability tends to be improved when the amount of the resin dispersant is 140 parts by weight or less with respect to 100 parts by weight of the pigment.

The resin-coated pigment (or encapsulated pigment) to be used in the invention may be produced by a conventional physical or chemical method using a resin dispersant, a pigment, and the like. For example, the resin-coated pigment may be produced in accordance with the method disclosed in Japanese Patent Application Laid-Open (JP-A) Nos. 9-151342, 10-140065, 11-209672, 11-172180, 10-25440, or 11-43636. Specifically, for example, methods such as a phase inversion method, an acid deposition method, or the like which are disclosed in JP-A Nos. 9-151342 or 10-140065 may be used, and phase inversion method is particularly preferable from the viewpoint of the dispersion stability.

The method of producing a pigment dispersion liquid of the invention include: a phase inversion emulsification process including mixing and dispersing a pigment, a resin dispersant, water, and an organic solvent (which may be referred to as "dispersion step"), and removing at least a part of the organic solvent and water after the dispersing (which may be referred to as "solvent removal step"); and adding a polyoxyethylene-polyoxypropylene block copolymer after the solvent removal step (which may be referred to as "addition step").
Specifically, in the method of producing a pigment dispersion liquid, a dispersion liquid is first obtained by phase inversion emulsification using a pigment, a resin dispersant, an organic solvent, and water, and, thereafter, a block copolymer is added to the dispersion liquid, whereby a pigment dispersion liquid is produced.
In general, the phase inversion emulsification method includes dispersing, in water, a mixed fused product of a pigment and a resin having self-dispersibility or dissolvability. Herein, the mixed fused product encompasses a product in the state of being mixed but not dissolved, a product in the state of being mixed and dissolved, and a product in the mixed state thereof. More specific production methods employing the "phase inversion" are described, for example, in JP-A No. 10-140065.

The pigment dispersion liquid may be a dispersion liquid of a resin-coated pigment, which is produced by using a resin dispersant and by a method including the process (1) to process (3) described below.
Furthermore, the ink composition of the invention may be produced using a dispersion liquid of resin-coated pigment (i.e., pigment dispersion liquid) obtained by the above production process, water, and an organic solvent.
Process (1): In Process (1), a mixture containing preferably a neutralizing agent in addition to a pigment, a resin dispersant, an organic solvent, and water is mixed by stirring or the like, and subjected to a dispersion treatment using a disperser or the like, whereby a dispersion liquid is obtained (dispersion process).
Process (2): In Process (2), at least a part of the organic solvent and the water is removed from the dispersion liquid (solvent removal process).
Process (3): In Process (3), after the removal of the volatile organic solvent and the like, a polyoxyethylene-polyoxypropylene block copolymer is added to the dispersion liquid, whereby a pigment dispersion liquid is obtained (addition process).
If needed, other processes may be additionally used.
Since the method of producing a pigment dispersion liquid of the invention includes the above processes, excellent dispersion stability can be obtained, generation of white spot defects in an image formed by the ink composition including the pigment dispersion liquid produced by the above processes can be suppressed, and high-quality images can be recorded.

The method for mixing is not particularly limited, and generally-used mixing and stirring apparatus, or, if needed, a dispersing apparatus such as an ultrasonic disperser, high-pressure homogenizer, or beads mill, may be used.

Examples of the solvent to be used in the method of the invention include alcohol solvents, ketone solvents, and ether solvents. Examples of the alcohol solvents include isopropyl alcohol, n-butanol, t-butanol, and ethanol. Examples of the ketone solvents include acetone, methyl ethyl ketone, diethyl ketone, and methyl isobutyl ketone. Exainples of the ether solvents include dibutyl ether and dioxane. Of these solvents, a ketone solvent such as methyl ethyl ketone and an alcohol solvent such as isopropyl alcohol are preferable, and methyl ethyl ketone is more preferable.

It is preferable to use a neutralizing agent in Process (1). The neutralizing agent is used for neutralizing some or all of the acidic groups of the resin dispersant, so that the resin dispersant can stably dispersed in water.
Examples of the neutralizing agent include alcohol amines (such as diethanolamine, triethanolamine, or 2-amino-2-ethyl-1,3-propanediol), alkali metal hydroxides (such as lithium hydroxide, sodium hydroxide, or potassium hydroxide), ammonium hydroxides (such as ammonium hydroxide or quaternary ammonium hydroxide), phosphonium hydroxides, and alkali metal carbonates, and sodium hydroxide or potassium hydroxide is preferably used.
The neutralizing agent can neutralize the acidic group included in the pigment dispersant (resin dispersant) when the dispersant for the resin-coated pigment particle is produced, and it is preferable to use the neutralizing agent in an amount of from 0.5 to 1.5 equivalents, and more preferably from 0.5 to 1 equivalent, with respect to the acid value of the pigment dispersant (resin dispersant).

In Process (2), the organic solvent is distilled off from the dispersion liquid obtained in Process (1) by a conventional method such as vacuum distillation or the like so as to convert the dispersion into an aqueous system, whereby a dispersion liquid of resin-coated pigment particles in which the surface of the pigments are coated with the resin dispersant is obtained. In the obtained dispersion liquid, the organic solvent has been substantially removed, and the amount of the organic solvent in the obtained dispersion liquid is preferably from 0.2% by mass or less, and more preferably 0.!% by mass or less.

The dispersion treatment may be carried out using, for example, a ball mill, a roll mill, a beads mill, a high-pressure homogenizer, a high-speed stirring disperser, an ultrasonic homogenizer, or the like.

More specifically, for example, the production method of the invention may include:
(1) neutralizing by mixing a basic compound (i.e., neutralizing agent) and a resin dispersant having an acidic group or a solution obtained by dissolving the resin dispersant in an organic solvent;
(2) producing a pigment dispersion liquid by (i) mixing a pigment and the mixed solution obtained in the above to produce a suspension and thereafter (ii) dispersing the pigment using a dispersing apparatus or the like;
(3) producing a pigment dispersion liquid by removing at least a part of the organic solvent and water, for example, by distillation, coating the pigment with a specific resin dispersant having an acidic group, and dispersing the pigment coated with a specific resin dispersant having an acidic group in an aqueous medium; and
(4) producing a pigment dispersion liquid by adding a polyoxyethylene-polyoxypropylene block copolymer after the removal of the organic solvent (addition process).
If needed, the disclosures of JP-A Nos. 11 -209672 and 11-172180 may be referred to.

The concentration (content) of the pigment to be coated with the resin dispersant is 12% by mass or more, preferably from 12 to 20% by mass, more preferably from 12 to 18% by mass, and particularly preferably from 12 to 15% by mass, with respect to the total mass of the pigment dispersion liquid from the viewpoints of dispersion stability and concentration in the pigment dispersion liquid.

The pigment dispersion liquid may be produced, for example, by mixing a pigment, a pigment dispersion liquid, an organic solvent, and ion-exchange water using a DISPER, and further treating the resultant mixture using a microfluidiser (ultra high-pressure homogenizer).
The dispersion treatment may be carried out only once using a dispersion apparatus, but it is preferable to carry out the dispersion treatment plural times from the viewpoint of improvement in storage stability of the pigment dispersion liquid. Furthermore, from the viewpoint of productivity, the dispersion treatment is carried out preferably from 3 to 12 times, more preferably from 3 to 10 times, and particularly preferably from 5 to 10 times.

The pigment dispersion liquid may additionally include other additives, if needed, in addition to the components described above. Specifically, the pigment dispersion liquid may further include an additional component such as a surfactant or the like, which is described below in the description of an ink composition, as long as the effect of the invention is not impaired.

### Ink Composition

The ink composition of the invention includes at least the pigment dispersion liquid of the invention, and, if necessary, may further include an organic solvent and water, and preferably further includes a neutralizing agent.

The ink composition of the invention is preferably used for inkjet recording.
The ink composition contains a pigment dispersion liquid produced by the method of producing a pigment dispersion liquid. The pigment dispersion liquid is a dense solution having favorable dispersion state, and has excellent long-term storage stability; therefore, when the obtained ink composition is used, generation of white spots defects can be suppressed, and high-quality images can be recorded.

The ink composition preferably includes, in addition to the pigment dispersion liquid, resin particles from the viewpoint of improving scratch resistance, and/or a surfactant from the viewpoint of controlling the surface tension. If needed, the ink composition may further include, for example, an additional component such as an ultraviolet absorber, a discoloration inhibitor, an antifungal agent, an antirust agent, an antioxidant, an emulsion stabilizer, an antiseptic agent, a defoaming agent, a viscosity modifier, a dispersion stabilizer, a chelate agent, a solid humectant, or the like.

Examples of the resin particles include particles of an acrylic resin, a vinyl acetate resin, a styrene-butadiene resin, a vinyl chloride resin, an acryl-styrene resin, a butadiene resin, a styrene resin, a crosslinking acrylic resin, a crosslinking styrene resin, a benzoguanamine resin, a phenol resin, a silicone resin, an epoxy resin, a urethane resin, a paraffin resin, a fluorine-containing resin, or the like, and polymer latexes containing any one of these resins.
More preferably, an acrylic resin, an acryl-styrene resin, a styrene resin, a crosslinking acrylic resin, or a crosslinking styrene resin may be used.

The weight-average molecular weight of the resin particles is preferably from 10,000 to 200,000, and more preferably from 100,000 to 200,000.
The average particle diameter of the resin particle is preferably from 10 nm to 1 um, more preferably from 10 nm to 200 nm, still more preferably from 20 nm to 100 nm, and particularly preferably from 20 nm to 50 nm.
The amount of the resin particles to be added is preferably from 0.5 to 20% by mass, more preferably from 3 to 20% by mass, and still more preferably from 5 to 15% by mass, with respect to the ink.
The glass transition temperature (Tg) of the resin particles is preferably 30°C or more, more preferably 40°C or more, and still more preferably from 50°C or more.
The particle size distribution of the polymer particles (resin particles) is not particularly limited, and may be a wide particle size distribution or a monodisperse particle size distribution. Alternatively, a mixture of two or more types of polymer fine particles each having a monodisperse particle size distribution may be used.

The ink composition preferably includes at least one surfactant. The surfactant may be used as a surface tension modifier, and examples thereof include nonionic surfactants, cationic surfactants, anionic surfactants, and betaine surfactants.
It is preferable that the ink composition contain a surfactant in an amount such that the surface tension of the ink composition can be adjusted to from 20 to 60 mN/m, for the purpose of favorably jetting the ink composition by an inkjet method. More specifically, the ink composition contains a surfactant in an amount such that the surface tension can be adjusted to more preferably from 20 to 45 mN/m, and still more preferably from 25 to 40 mN/m.

As the surfactant, a compound having a hydrophilic moiety and a hydrophobic moiety in a molecule thereof is effectively used, for example, and any one of anionic surfactants, cationic surfactants, amphoteric surfactants, and nonionic surfactants may be used.

The content of the surfactant in the ink composition is not particularly limited, but is preferably 1% by mass or more, more preferably from 1 to 10% by mass, and still more preferably from 1 to 3% by mass.

Examples of the ultraviolet absorber include benzophenone ultraviolet absorbers, benzotriazole ultraviolet absorbers, salicylate ultraviolet absorbers, cyanoacrylate ultraviolet absorbers, and nickel complex salt ultraviolet absorbers.

As the discoloration inhibitor, any one of various organic and metal complex discoloration inhibitors may be used. Examples of organic discoloration inhibitors include hydroquinones, alkoxyphenols, dialkoxyphenols, phenols, anilines, amines, indanes, chromanes, alkoxyanilines, and hetero rings, and examples of metal complex discoloration inhibitors include nickel complexes and zinc complexes.

Examples of the antifungal agent include sodium dehydroacetate, sodium benzoate, sodium pyridinethinn-1-oxide, ethyl p-hydroxybenzoic acid ester, 1,2-benzisothiazolin-3-on, sodium sorbate, and sodium pentachlorophenol. The antifungal agent is preferably included in the ink in an amount of from 0.02 to 1.00% by mass with respect to the ink.

Examples of the antirust agent include acidic sulfide, sodium thiosulfate, ammonium thiodiglycolate, diisopropyl ammonium nitrite, pentaerythritol tetranitrate, and dicyclohexyl ammonium nitrite.

Examples of the antioxidant include phenol antioxidants (including hindered phenol antioxidants), amine antioxidants, sulfur-containing antioxidants, and phosphor-containing antioxidants.

Examples of the chelate agent include sodium ethylene diamine tetraacetate, sodium nitrilotriacetate, sodium hydroxyethyl ethylene diamine triacetate, sodium diethylene triamine pentaacetate, and sodium uramil diacetate.

Examples of the solid humectant include: sugars such as glucose, mannose, fructose, ribose, xylose, arabinose, galactose, aldonic acid, glucitol, maltase, cellobiose, lactose, sucrose, trehalose, or maltotriose; sugar alcohols; hyaluronic acids; and ureas.

### Physical Properties of Ink Composition

In the invention, a surface tension (at 25°C) of the ink composition is preferably from 20 mN/m to 60 mN/m, more preferably from 20 mN/m to 45 mN/m, and still more preferably from 25 mN/m to 40 mN/m.
The surface tension is a value obtained by measuring the surface tension of an aqueous ink at 25°C using an automatic surface tensiometer CBVP-Z (trade name, manufactured by Kyowa Interface Science Co., Ltd.).

The viscosity at 20°C of the ink composition is preferably from 1.2 mPa·s to 15.0 mPa·s, more preferably from 2 mPa·s to less than 13 mPa·s, and still more preferably from 2.5 mPa·s to less than 10 mPa·s.
The viscosity is a value obtained by measuring the viscosity of an aqueous ink at 20°C using VISCOMETER TV-22 (trade name, manufactured by Toki Sangyo Co., Ltd.).

The ink composition of the invention may be used for formation of multi-color images (for example, full-color images). For forming a full-color image, a magenta ink composition, a cyan ink composition, and a yellow ink composition may be used, and a black ink composition may be additionally used for adjusting color tone.
Furthermore, ink compositions of color tones other than the yellow (Y), magenta (M), and cyan (C), such as red (R), green (G), blue (B) or white (W), ink compositions of so-called specific color ink compositions, as used in the field of printing, or the like may be used.
The ink compositions having respective color tones may each be prepared by changing the pigment used as a colorant to a pigment having a desired hue.

### EXAMPLES

Hereinbelow, the present invention is more specifically described by referring to Examples. However, the present invention is not limited to the specific examples described below. In the following description, "part(s)" and "%" are on the mass basis unless otherwise noted.

### Synthesis Example 1

### Synthesis of Resin Dispersant P-1 I

In a 1,000-ml three-necked flask equipped with a stirrer and a condenser, 88 g of methyl ethyl ketone was placed and heated to 72°C under a nitrogen atmosphere. To this solution, a solution obtained by dissolving 0.85 g of dimethyl-2,2'-azobisisobutyrate, 50 g of phenoxyethyl methacrylate, 13 g of methacrylic acid, and 37 g of methyl methacrylate in 50 g of methyl ethyl ketone was added by dropping over 3 hours. After completion of the addition, the resultant solution was left for allowing the reaction for 1 hour. After that, a solution obtained by dissolving 0.42 g of dimethyl-2,2'-azobisisobutyrate in 2 g of methyl ethyl ketone was added thereto, and the mixed solution was heated at 78°C for 4 hours. The resultant reaction solution was subjected to precipitation twice using an excess amount of hexane, and the precipitated resin was dried, thereby obtaining 96.5 g of a phenoxyethyl methacrylate/methyl methacrylate/methacrylic acid copolymer (resin dispersant P-1).
The formulation of the thus-obtained resin dispersant was confirmed by ¹H-NMR, and it was found that the weight-average molecular weight (Mw) obtained by GPC was 41,900. The acid value of the polymer obtained in accordance with the method described in JIS K0070 (1992) was found to be 84.7 mgKOH/g.

### Synthesis Example 2

### Synthesis of Resin Dispersants P-2 to P-11

Resin dispersants P-2 to P-11 were synthesized in the same manner as in the synthesis of resin dispersant P-1 (Synthesis Example 1) except that the types and ratio of respective monomers, specifically the types and ratio of phenoxyethyl methacrylate, methacrylic acid, methyl methacrylate, and ethyl methacrylate were changed as shown in Table 4, respectively.
Tables 4 and 5 show weight-average molecular weights and acid values of the synthesized resin dispersants, which were measured in the same manner as for Resin dispersant P-1.

### Example 1

### Preparation of Dispersion Liquid of Resin-coated Pigment Particles

First, 1 parts of a yellow pigment (C.I. Pigment Yellow 74), 6 parts of Resin dispersant P-1, 17 parts of methyl ethyl ketone, 8 parts of 1 N aqueous NaOH solution, and 54 parts of ion-exchange water were mixed and further mixed using a DISPER, followed by 10-pass treatment using a dispersion apparatus (i.e., microfluidiser M-140K, at 150 MPa). Subsequently, methyl ethyl ketone was removed from the resultant dispersion liquid under reduced pressure at 55°C, and a part of water was removed. Then, a polyoxyethylene-polyoxypropylene block polymer (NEWPOL PE-108, trade name, manufactured by Sanyo Chemical Industries Ltd.) was added thereto such that the content of the block polymer was 2% with respect to the solid content of the pigment, and water was added, thereby obtaining a dispersion liquid of resin-coated pigment particles having a pigment concentration of 15% by mass.

### Measurement of Particle Diameter of Resin-coated Pigment Particles

The volume average particle diameter of the obtained dispersion liquid of resin-coated pigment particles was measured by dynamic light scattering method using a nanotrac particle size distribution measurement apparatus UPA-EX150 (trade name, manufactured by Nikkiso Co., Ltd.). In the measurement process, 10 ml of ion-exchange water was added to 10 µl of the dispersion liquid of resin-coated pigment particles so as to prepare a sample solution for measurement, and the measurement was carried out while the sample solution was kept at 25°C. The results are shown in Table 4.

### Evaluation of Pigment Dispersion Liquid

The pigment dispersion liquid was charged into a buret (having a height of 25 cm) and left stand for I week. After that, the dispersion liquid present in a region from the top to 2 cm from the top in the buret (which may be referred to as "top region" hereinafter) and the dispersion liquid present in a region from the bottom to 2 cm from the bottom in the buret (which may be referred to as "bottom region" hereinafter) were collected and diluted 10,000-fold with pure water, respectively, followed by measurement of absorbance at the maximum absorption wavelength for determining the difference in pigment concentrations in the top region and bottom region. For the measurement, a V-570 spectrophotometer (trade name, manufactured by JASCO Corporation) was used.

### Evaluation Criteria

A: The difference in concentration between the top and bottom regions was less than 1%.
B: The difference in concentration between the top and bottom regions was from 1% to less than 2%.
C: The difference in concentration between the top and bottom regions was from 2% to less than 5%.
D: The difference in concentration between the top and bottom regions was from 5% to less than 7%.
E: The difference in concentration between the top and bottom regions was 7% or more.

### Example 2

First, 15 parts of a yellow pigment (C.I. Pigment Yellow 74), 6 parts of Resin dispersant P-2, 17 parts of methyl ethyl ketone, 7.4 parts of 1 N aqueous NaOH solution, and 54.6 parts of ion-exchange water were mixed and further mixed using a DISPER, followed by 10-pass treatment using a dispersion apparatus (i.e., microfluidiser M-140K, at 150 MPa). Subsequently, methyl ethyl ketone was removed from the resultant dispersion liquid under reduced pressure at 55°C, and a part of water was removed. Then, a polyoxyethylene-polyoxypropylene block polymer (NEWPOL PE-108, trade name, manufactured by Sanyo Chemical Industries Ltd.) was added thereto such that the content of the block polymer was 2% with respect to the solid content of the pigment, and water was added, thereby obtaining a dispersion liquid of resin-coated pigment particles having a pigment concentration of 15% by mass.
The measurement of the pigment particle diameter and the evaluation of the pigment dispersion liquid were carried out in the same manner as in Example 1. The results are shown in Table 4.

### Examples 3

First, 15 parts of a yellow pigment (C.I. Pigment Yellow 74), 6 parts of Resin dispersant P-3, 17 parts of methyl ethyl ketone, 6.8 parts of 1 N aqueous NaOH solution, and 55.2 parts of ion-exchange water were mixed and further mixed using a DISPER, followed by 10-pass treatment using a dispersion apparatus (i.e., microfluidiser M-140K, at 150 MPa). Subsequently, methyl ethyl ketone was removed from the resultant dispersion liquid under reduced pressure at 55°C, and a part of water was removed. Then, a polyoxyethylene-polyoxypropylene block polymer (NEWPOL PE-108, trade name, manufactured by Sanyo Chemical Industries Ltd.) was added thereto such that the content of the block polymer was 2% with respect to the solid content of the pigment, and water is added, thereby obtaining a dispersion liquid of resin-coated pigment particles having a pigment concentration of 15% by mass.
The measurement of the pigment particle diameter and the evaluation of the pigment dispersion liquid were carried out in the same manner as in Example 1. The results are shown in Table 4.

### Example 4

First, 15 parts of a yellow pigment (C.I. Pigment Yellow 74), 6 parts of Resin dispersant P-4, 17 parts of methyl ethyl ketone, 6.2 parts of 1 N aqueous NaOH solution, and 55.8 parts of ion-exchange water were mixed and further mixed using a DISPER, followed by 10-pass treatment using a dispersion apparatus (i.e., microfluidiser M-140K, at 150 MPa). Subsequently, methyl ethyl ketone was removed from the resultant dispersion liquid under reduced pressure at 55°C, and a part of water was removed. Then, a polyoxyethylene-polyoxypropylene block polymer (NEWPOL PE-108, trade name, manufactured by Sanyo Chemical Industries Ltd.) was added thereto such that the content of the block polymer was 2% by mass with respect to the solid content of the pigment, and water was added, thereby obtaining a dispersion liquid of resin-coated pigment particles having a pigment concentration of 15% by mass.
The measurement of the pigment particle diameter and the evaluation of the pigment dispersion liquid were carried out in the same manner as in Example 1. The results are shown in Table 4.

### Example 5

First, 15 parts of a yellow pigment (C.I. Pigment Yellow 74), 6 parts of Resin dispersant P-5, 17 parts of methyl ethyl ketone, 5.5 parts of 1 N aqueous NaOH solution, and 56.5 parts of ion-exchange water were mixed and further mixed using a DISPER, followed by 10-pass treatment using a dispersion apparatus (i.e., microfluidiser M-140K, at 150 MPa). Subsequently, methyl ethyl ketone was removed from the resultant dispersion liquid under reduced pressure at 55°C, and a part of water was removed. Then, a polyoxyethylene-polyoxypropylene block polymer (NEWPOL PE-108, trade name, manufactured by Sanyo Chemical Industries Ltd.) was added thereto such that the content of the block polymer was 2% with respect to the solid content of the pigment, and water was added, thereby obtaining a dispersion liquid of resin-coated pigment particles having a pigment concentration of 15% by mass.
The measurement of the pigment particle diameter and the evaluation of the pigment dispersion liquid were carried out in the same manner as in Example 1. The results are shown in Table 4.

### Examples 6

First, 15 parts of a yellow pigment (C.I. Pigment Yellow 74), 6 parts of Resin dispersant P-6, 17 parts of methyl ethyl ketone, 5 parts of 1 N aqueous NaOH solution, and 57 parts of ion-exchange water were mixed and further mixed using a DISPER, followed by 10-pass treatment using a dispersion apparatus (i.e., microfluidiser M-140K, at 150 MPa). Subsequently, methyl ethyl ketone was removed from the resultant dispersion liquid under reduced pressure at 55°C, and a part of water was removed. Then, a polyoxyethylene-polyoxypropylene block polymer (NEWPOL PE-108, trade name, manufactured by Sanyo Chemical Industries Ltd.) was added thereto such that the content of the block polymer was 2% with respect to the solid content of the pigment, and water was added, thereby obtaining a dispersion liquid of resin-coated pigment particles having a pigment concentration of 15% by mass.
The measurement of the pigment particle diameter and the evaluation of the pigment dispersion were carried out in the same manner as in Example 1. The results are shown in Table 4.

### Example 7

A pigment dispersion liquid of Example 7 was produced and evaluated in the same manner as in Example 1, except that the resin dispersant used in Example 1 was changed to the resin dispersant shown in Table 4. The results are shown in Table 4.

### Example 8

A pigment dispersion liquid of Example 8 was produced and evaluated in the same manner as in Example 2, except that the resin dispersant used in Example 2 was changed to the resin dispersant shown in Table 4. The results are shown in Table 4.

### Example 9

A pigment dispersion liquid of Example 9 was produced and evaluated in the same manner as in Example 3, except that the resin dispersant used in Example 3 was changed to the resin dispersant shown in Table 4. The results are shown in Table 4.

### Example 10

A pigment dispersion liquid of Example 10 was produced and evaluated in the same manner as in Example 4, except that the resin dispersant used in Example 4 was changed to the resin dispersant shown in Table 4. The results are shown in Table 4.

### Example 11

A pigment dispersion liquid of Example 11 was produced and evaluated in the same manner as in Example 5, except that the resin dispersant used in Example 5 was changed to the resin dispersant shown in Table 4. The results are shown in Table 4.

### Examples 12 to 22

Dispersion liquids of resin-coated pigment particles of Examples 12 to 22 were produced and evaluated in the same manner as in Examples 1 to 11, respectively, except that the polyoxyethylene-polyoxypropylene block polymer (NEWPOL PE-108, trade name, manufactured by Sanyo Chemical Industries Ltd.) and the addition amount thereof were changed to a polyoxyethylene-polyoxypropylene block polymer (NEWPOL PE-68, trade name, manufactured by Sanyo Chemical Industries Ltd.) and the addition amount shown in Table 4, respectively. The results are shown in Table 4.

### Examples 23 to 33

Dispersion liquids of resin-coated pigment particles of Examples 23 to 33 were produced and evaluated in the same manner as in Examples I to 11, respectively, except that the polyoxyethylene-polyoxypropylene block polymer (NEWPOL PE-108, trade name, manufactured by Sanyo Chemical Industries Ltd.) and the addition amount thereof were changed to a polyoxyethylene-polyoxypropylene block polymer (NEWPOL PE-78, trade name, manufactured by Sanyo Chemical Industries Ltd.) and the addition amount shown in Table 4, respectively. The results are shown in Table 4.

### Examples 34 to 44

Dispersion liquids of resin-coated pigment particles of Examples 34 to 44 were produced and evaluated in the same manner as in Examples 1 to 11, respectively, except that the polyoxyethylene-polyoxypropylene block polymer (NEWPOL PE-108, trade name, manufactured by Sanyo Chemical Industries Ltd.) was changed to a polyoxyethylene-polyoxypropylene block polymer (NEWPOL PE-128, trade name, manufactured by Sanyo Chemical Industries Ltd.) shown in Table 4. The results are shown in Table 4.

### Comparative Examples 1 to 11

Dispersion liquids of resin-coated pigment particles of Comparative Examples 1 to 11 were produced and evaluated in the same manner as in Examples 1 to 11, respectively, except that the polyoxyethylene-polyoxypropylene block polymer (NEWPOL PE-108, trade name, manufactured by Sanyo Chemical Industries Ltd.) was not added. The results are shown in Table 4.

### Examples 45 to 47

Dispersion liquids of resin-coated pigment particles of Examples 45 to 47 were produced and evaluated in the same manner as in Example 1, except that the addition amount of the polyoxyethylene-polyoxypropylene block polymer (NEWPOL PE-108, trade name, manufactured by Sanyo Chemical Industries Ltd.) relative to the pigment was changed to those shown in Table 5. The results are shown in Table 5.

### Examples 48 to 50

Dispersion liquids of resin-coated pigment particles of Examples 48 to 50 were produced and evaluated in the same manner as in Example 2, except that the addition amount of the polyoxyethylene-polyoxypropylene block polymer (NEWPOL PE-108, trade name, manufactured by Sanyo Chemical Industries Ltd.) relative to the pigment was changed to those shown in Table 5. The results are shown in Table 5.

### Examples 51 to 54

Dispersion liquids of resin-coated pigment particles of Examples 51 to 54 were produced and evaluated in the same manner as in Example 3, except that the addition amount of the polyoxyethylene-polyoxypropylene block polymer (NEWPOL PE-108, trade name, manufactured by Sanyo Chemical Industries Ltd.) relative to the pigment was changed to those shown in Table 5. The results are shown in Table 5.

### Examples 55 to 57

Dispersion liquids of resin-coated pigment particles of Examples 55 to 57 were produced and evaluated in the same manner as in Example 4, except that the addition amount of the polyoxyethylene-polyoxypropylene block polymer (NEWPOL PE-108, trade name, manufactured by Sanyo Chemical Industries Ltd.) relative to the pigment was changed to those shown in Table 5. The results are shown in Table 5.

### Examples 58 to 60

Dispersion liquids of resin-coated pigment particles of Examples 58 to 60 were produced and evaluated in the same manner as in Example 5, except that the addition amount of the polyoxyethylene-polyoxypropylene block polymer (NEWPOL PE-108, trade name, manufactured by Sanyo Chemical Industries Ltd.) relative to the pigment was changed to those shown in Table 5. The results are shown in Table 5.

### Examples 61 to 63

Dispersion liquids of resin-coated pigment particles of Examples 61 to 63 were produced and evaluated in the same manner as in Example 8, except that the addition amount of the polyoxyethylene-polyoxypropylene block polymer (NEWPOL PE-108, trade name, manufactured by Sanyo Chemical Industries Ltd.) relative to the pigment was changed to those shown in Table 5. The results are shown in Table 5.

### Examples 64 to 67

Dispersion liquids of resin-coated pigment particles of Examples 64 to 67 were produced and evaluated in the same manner as in Example 9, except that the addition amount of the polyoxyethylene-polyoxypropylene block polymer (NEWPOL PE-108, trade name, manufactured by Sanyo Chemical Industries Ltd.) relative to the pigment was changed to those shown in Table 5. The results are shown in Table 5.

### Examples 68 to 70

Dispersion liquids of resin-coated pigment particles of Examples 68 to 70 were produced and evaluated in the same manner as in Example 10, except that the addition amount of the polyoxyethylene-polyoxypropylene block polymer (NEWPOL PE-108, trade name, manufactured by Sanyo Chemical Industries Ltd.) relative to the pigment was changed to those shown in Table 5. The results are shown in Table 5.

### Example 71

A dispersion liquid of resin-coated pigment particles of Example 71 was produced and evaluated in the same manner as in Example 2 except that the pigment concentration was adjusted to 13% by mass. The results are shown in Table 5.

### Example 72

First, 17 parts of a yellow pigment (C.I. Pigment Yellow 74), 6.8 parts of Resin dispersant P-2, 17 parts of methyl ethyl ketone, 8.5 parts of 1 N aqueous NaOH solution, and 50.7 parts of ion-exchange water were mixed and further mixed using a DISPER, followed by 10-pass treatment using a dispersion apparatus (i.e., microfluidiser M-140K, at 150 MPa). Subsequently, methyl ethyl ketone was removed from the resultant dispersion liquid under reduced pressure at 55°C, and a part of water was removed. Then, a polyoxyethylene-polyoxypropylene block polymer (NEWPOL PE-108, trade name, manufactured by Sanyo Chemical Industries Ltd.) was added thereto such that the content of the block polymer was 2% with respect to the solid content of the pigment, and water was added, thereby obtaining a dispersion liquid of resin-coated pigment particles having a pigment concentration of 17% by mass.

The measurement of the pigment particle diameter and the evaluation of the pigment dispersion liquid were carried out in the same manner as in Example 1. The results are shown in Table 5.

### Example 73

A dispersion liquid of resin-coated pigment particles of Example 73 was produced and evaluated in the same manner as in Example 3 except that the pigment concentration was adjusted to 13% by mass. The results are shown in Table 5.

### Example 74

First, 17 parts of a yellow pigment (C.I. Pigment Yellow 74), 6.8 parts of Resin dispersant P-3, 17 parts of methyl ethyl ketone, 7.8 parts of 1 N aqueous NaOH solution, and 51.4 parts of ion-exchange water were mixed and further mixed using a DISPER, followed by 10-pass treatment using a dispersion apparatus (i.e., microfluidiser M-140K, at 150 MPa). Subsequently, methyl ethyl ketone was removed from the resultant dispersion liquid under reduced pressure at 55°C, and a part of water was removed. Then, a polyoxyethylene-polyoxypropylene block polymer (NEWPOL PE-108, trade name, manufactured by Sanyo Chemical Industries Ltd.) was added thereto such that the content of the block polymer was 2% with respect to the solid content of the pigment, and water was added, thereby obtaining a dispersion liquid of resin-coated pigment particles having a pigment concentration of 17% by mass.

The measurement of the pigment particle diameter and the evaluation of the pigment dispersion liquid were carried out in the same manner as in Example 1. The results are shown in Table 5.

### Comparative Examples 12 and 13

Dispersion liquids of resin-coated pigment particles of Comparative Examples 12 and 13 were produced and evaluated in the same manner as in Comparative Example 2 except that the pigment concentration was adjusted to 10% by mass and 5% by mass, respectively. The results are shown in Table 5.

### Comparative Examples 14 and 15

Dispersion liquids of resin-coated pigment particles of Comparative Examples 14 and 15 were produced and evaluated in the same manner as in Example 2 except that the pigment concentration was adjusted to 10% by mass and 5% by mass, respectively. The results are shown in Table 5.

### Comparative Examples 16 and 17

Dispersion liquids of resin-coated pigment particles of Comparative Examples 16 and 17 were produced and evaluated in the same manner as in Comparative Example 3 except that the pigment concentration was adjusted to 10% by mass and 5% by mass, respectively. The results are shown in Table 5.

### Comparative Examples 18 and 19

Dispersion liquids of resin-coated pigment particles of Comparative Examples 18 and 19 were produced and evaluated in the same manner as in Example 3 except that the pigment concentration was adjusted to 10% by mass and 5% by mass, respectively. The results are shown in Table 5.

### Comparative Examples 20 to 23

Dispersion liquids of resin-coated pigment particles of Comparative Examples 20 to 23, which are shown in Table 5, were produced and evaluated in the same manner as in Examples 71 to 74, respectively, except that the polyoxyethylene-polyoxypropylene block polymer (NEWPOL PE-108, trade name, manufactured by Sanyo Chemical Industries Ltd.) was not added. The results are shown in Table 5.

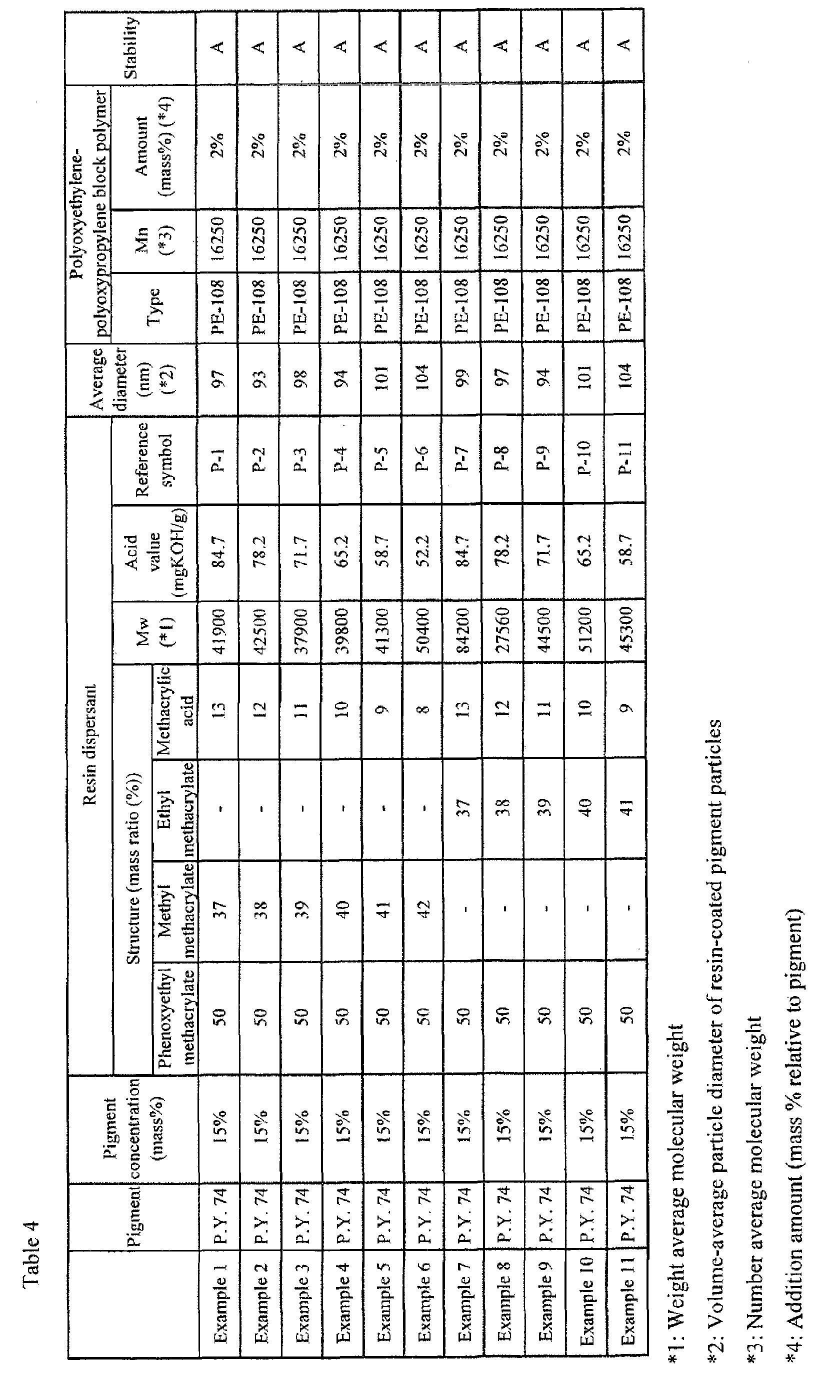

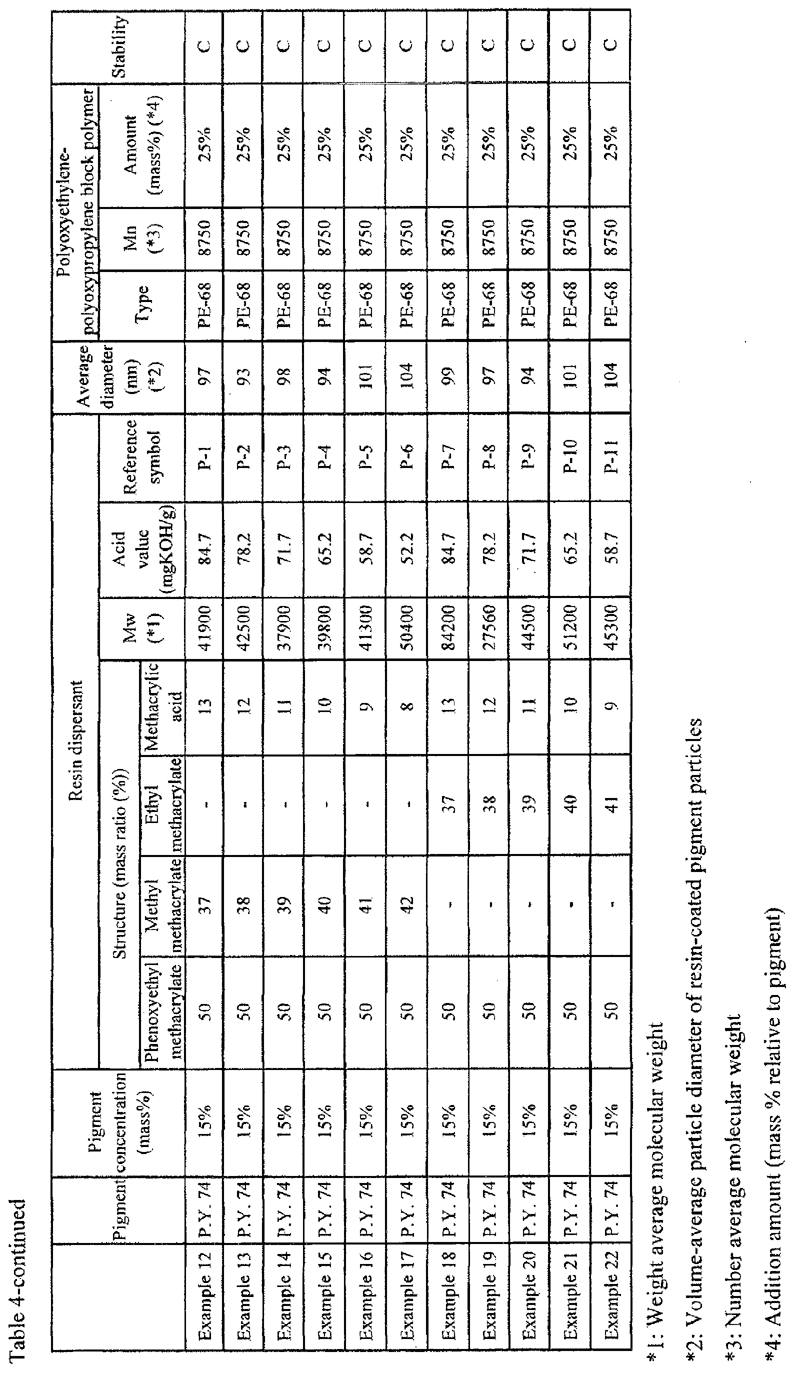

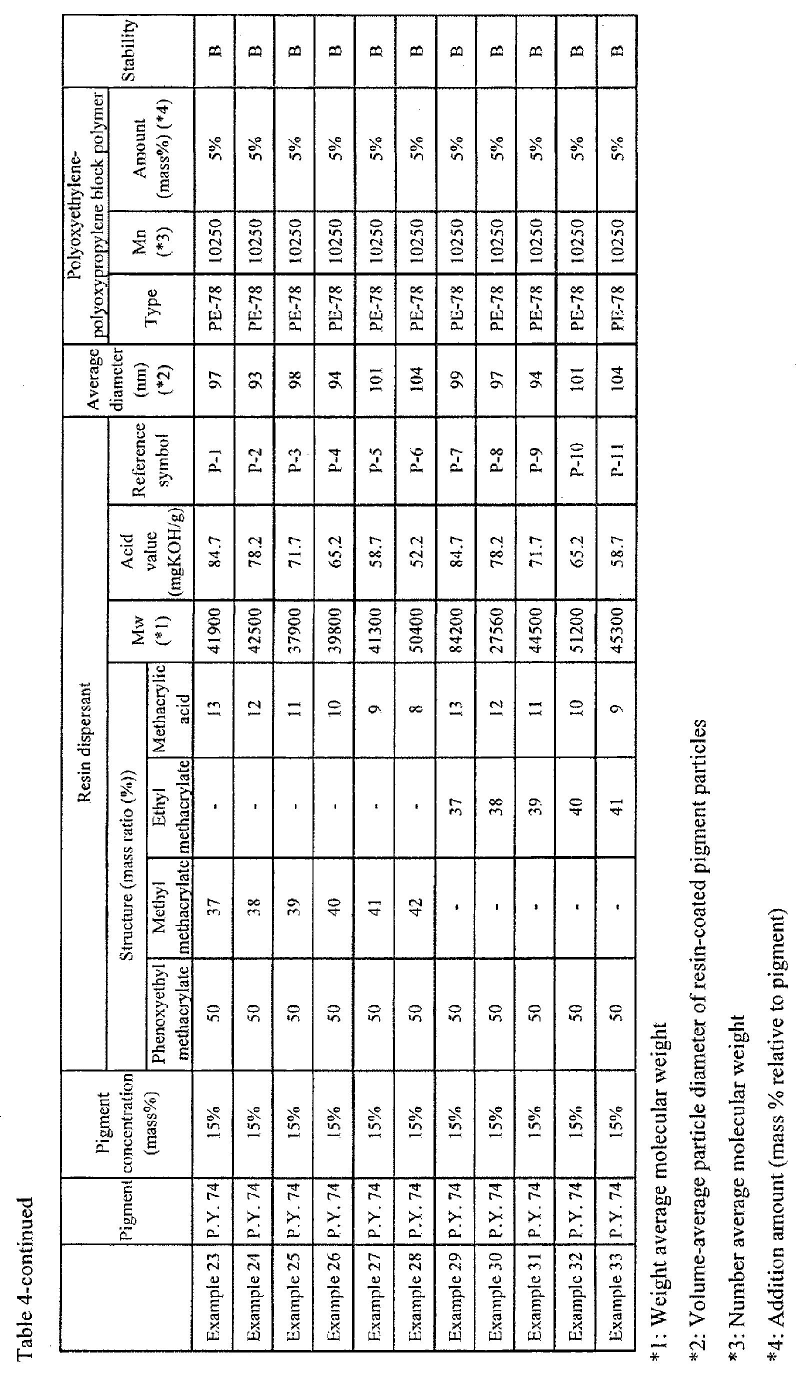

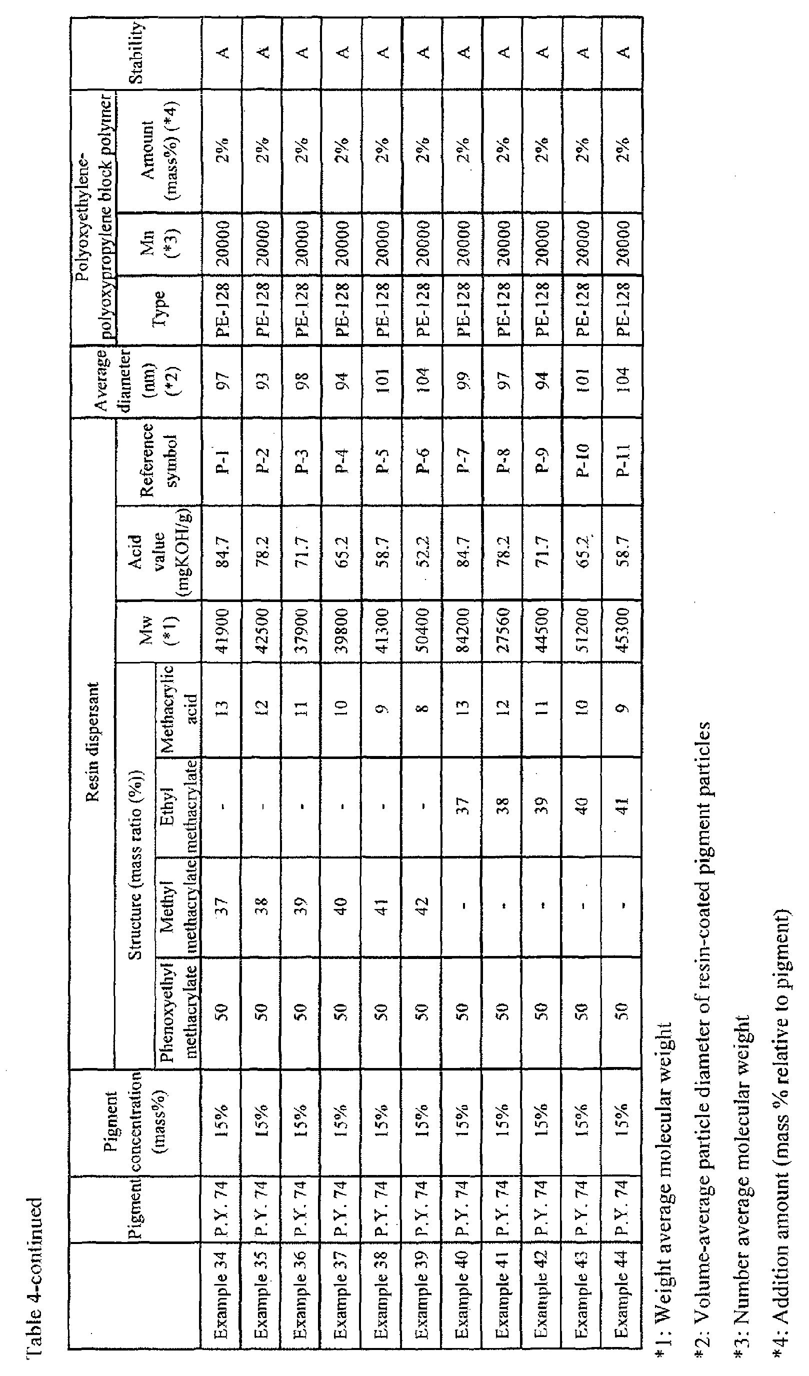

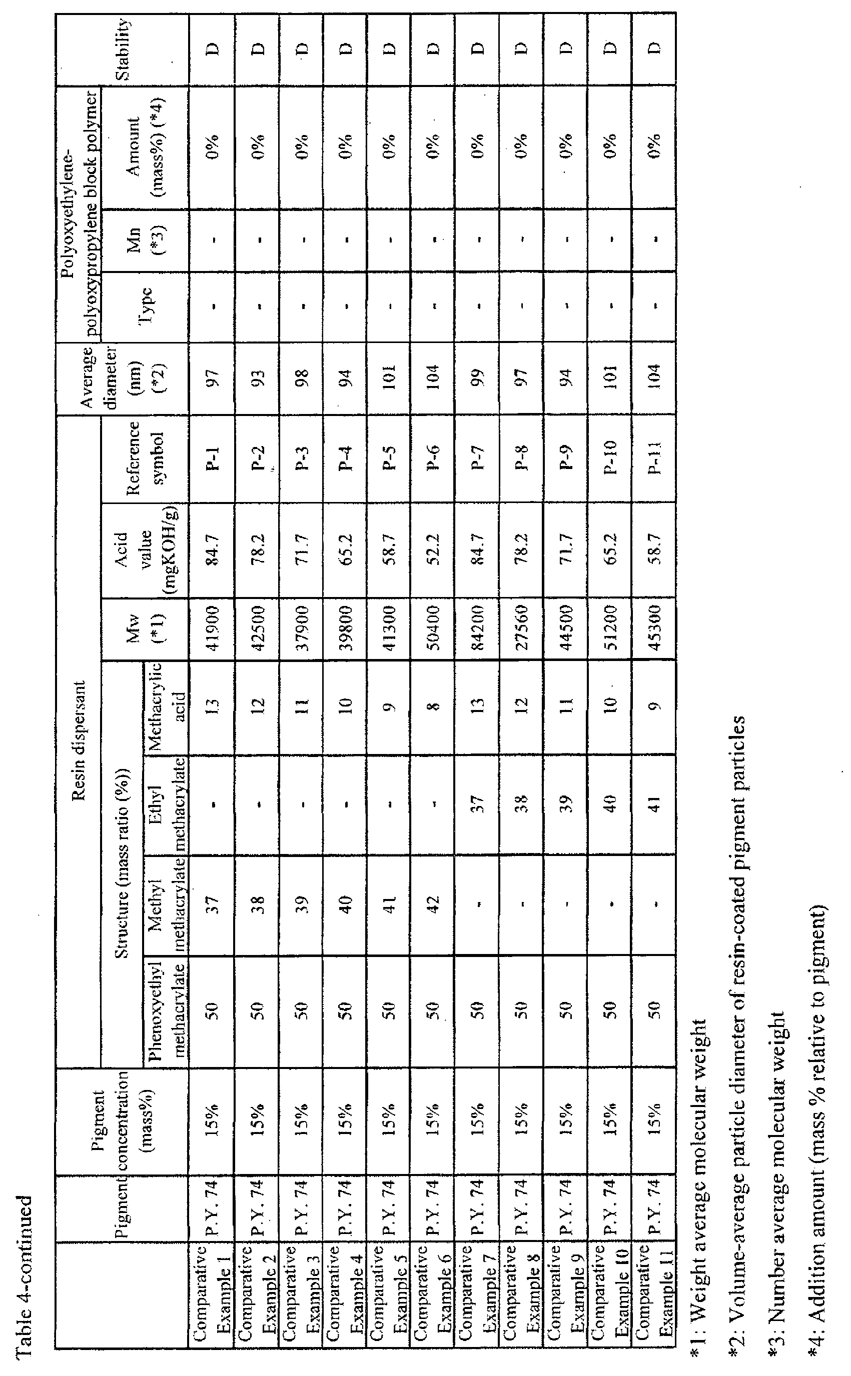

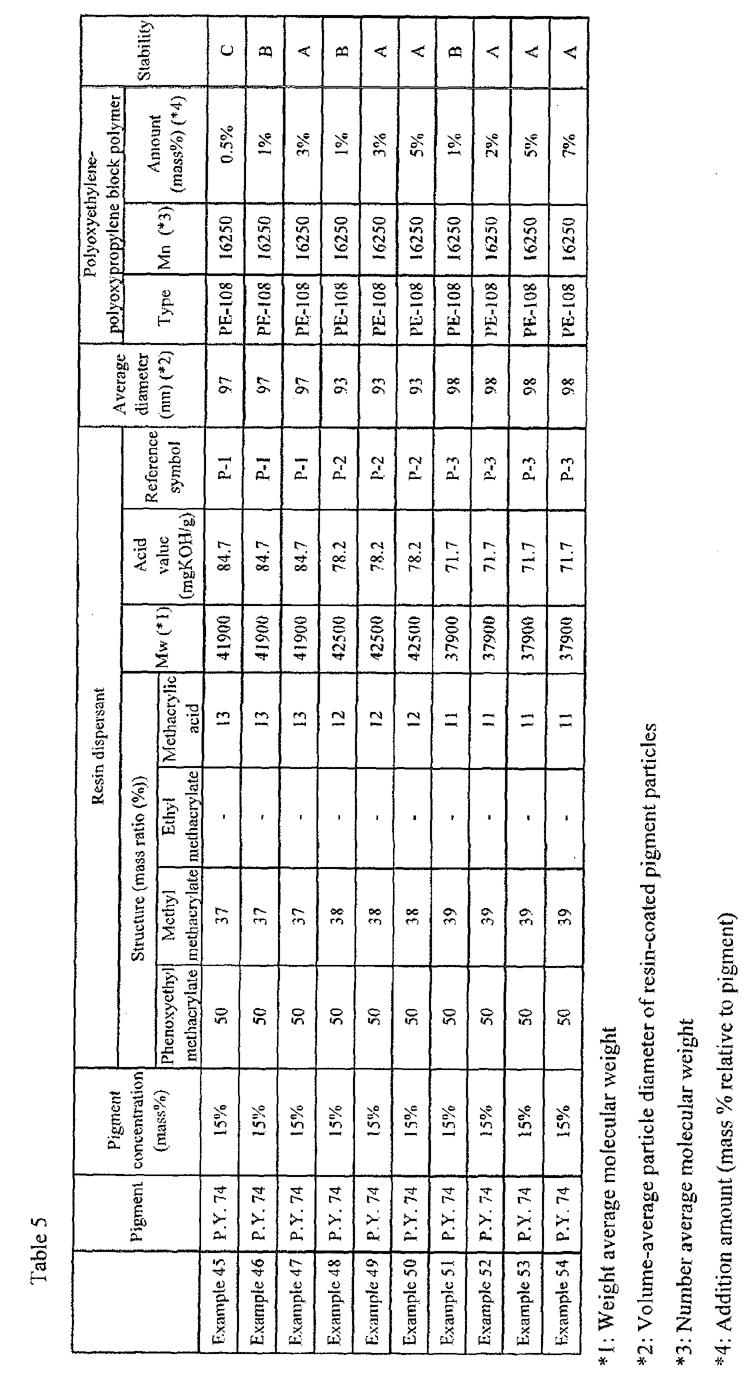

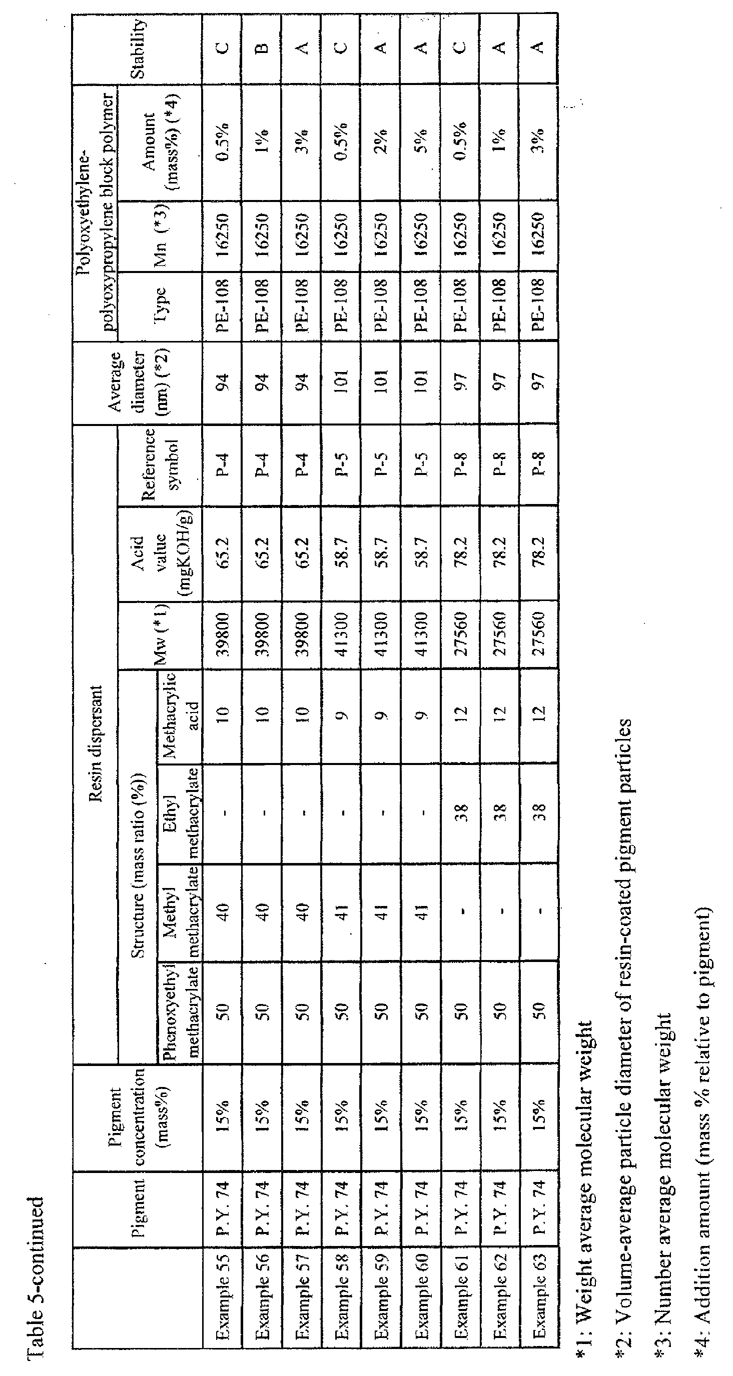

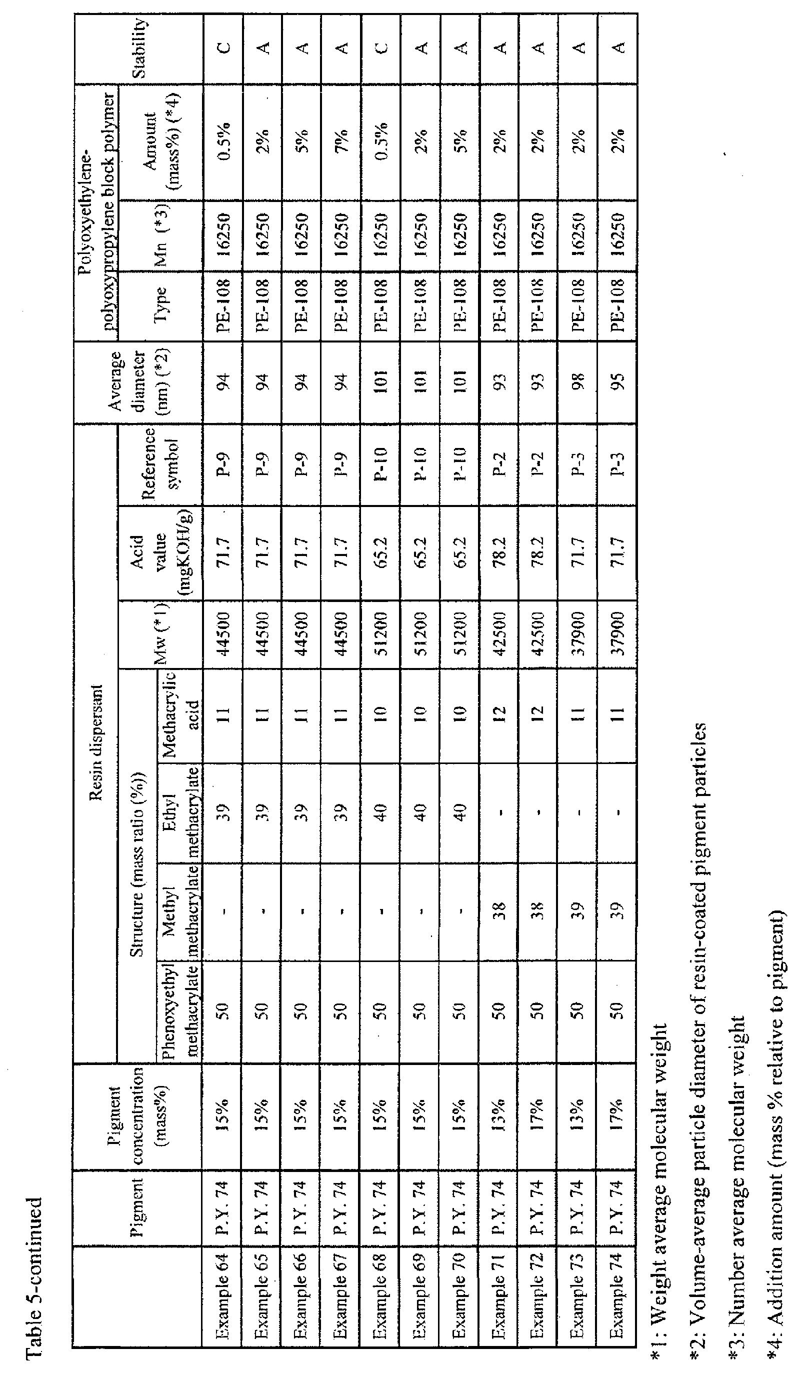

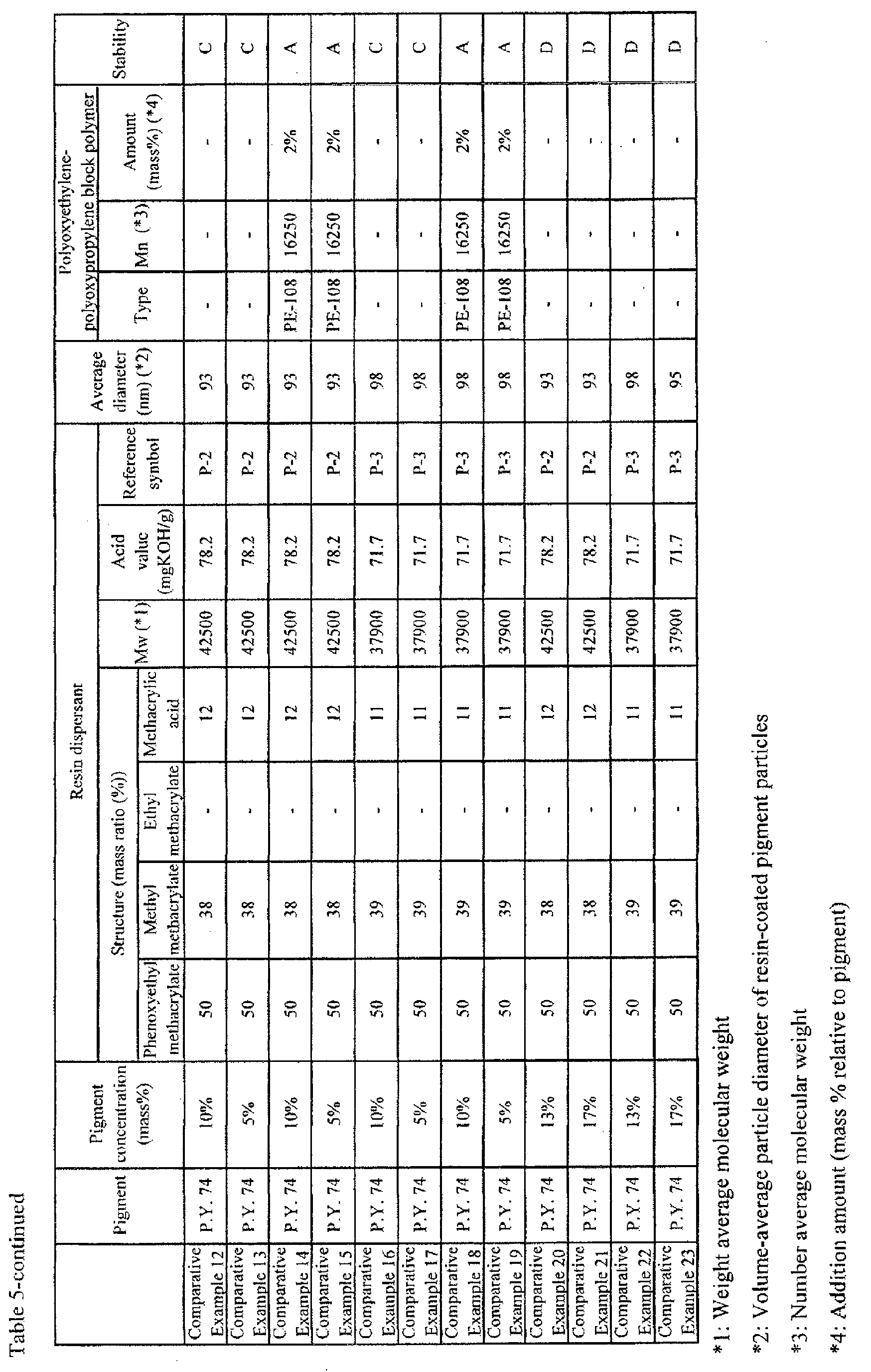

As clear from Tables 4 and 5, the dispersion liquids of resin-coated pigment particles of Examples, which have the configurations of the present invention, exerted excellent stability even when the pigment concentration falls into such a range that stability is otherwise deteriorated.

According to the invention, a pigment dispersion liquid having excellent dispersion stability even when the dispersion liquid has a high pigment concentration, and a method of producing the same are provided.
Furthermore, according to the invention, an ink composition having excellent stability and excellent image scratch resistance is provided.

Embodiments of the present invention include, but are not limited to, the following.
<1> A pigment dispersion liquid comprising:
   a resin-coated pigment including a pigment and a resin dispersant that covers the pigment; a polyoxyethylene-polyoxypropylene block copolymer; and
   water,
   wherein the concentration of the pigment is 12% by mass or more with respect to the total mass of the pigment dispersion liquid.
<2> The pigment dispersion liquid according to <1>, wherein the pigment is an azo pigment.
<3> The pigment dispersion liquid according to <1> or <2>, wherein:
   the resin dispersant comprises one or more hydrophilic structural units (A) in a content of 15% by mass or less with respect to the total mass of the resin dispersant, and one or more hydrophobic structural units (B') represented by Formula (I);
   the content ratio of aromatic rings is 20% by mass or less with respect to the total mass of the resin dispersant; and
   the hydrophilic structural units (A) comprise at least a structural unit derived from (meth)acrylic acid: 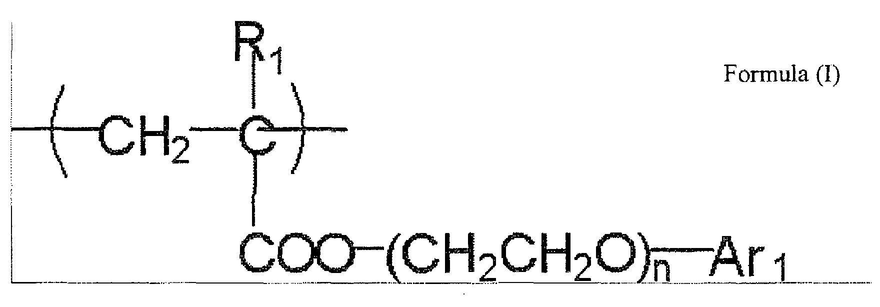
   wherein, in Formula (I), R₁ represents a hydrogen atom or a methyl group; Ar₁ represents an unsubstituted aromatic ring or a substituted aromatic ring; and n represents an average repetition number of from 1 to 6.
<4> The pigment dispersion liquid according to any one of <1> to <3>, wherein the content of the polyoxyethylene-polyoxypropylene block copolymer is from 0.5% by mass to 27% by mass with respect to the pigment.
<5> The pigment dispersion liquid according to <4>, wherein the content of the polyoxyethylene-polyoxypropylene block copolymer is from 1% by mass to 7% by mass with respect to the pigment.
<6> The pigment dispersion liquid according to any one of <1> to <5>, wherein a number-average molecular weight of the polyoxyethylene-polyoxypropylene block copolymer is from 10,000 to 30,000.
<7> The pigment dispersion liquid according to any one of <1> to <6>, wherein an acid value of the resin dispersant is from 30 mgKOH/g to 97.8 mgKOH/g.
<8> The pigment dispersion liquid according to any one of <1> to <7>, wherein the resin dispersant has a weight-average molecular weight of 30,000 or more.
<9> The pigment dispersion liquid according to any one of <2> to <8>, wherein the pigment is an azo yellow pigment.
<10> A method of producing a pigment dispersion liquid, the method comprising:
   a phase inversion emulsification process comprising:
      mixing and dispersing a pigment, a resin dispersant, water, and an organic solvent; and
      removing at least a part of the organic solvent and the water after the dispersing; and adding a polyoxyethylene-polyoxypropylene block copolymer after the removing of at least a part of the organic solvent and the water.
<11> An ink composition comprising at least the pigment dispersion liquid according to any one of <1> to <9>, or a pigment dispersion liquid produced by the method according to <10>.

All publications, patent applications, and technical standards mentioned in this specification are herein incorporated by reference to the same extent as if each individual publication, patent application, or technical standard was specifically and individually indicated to be incorporated by reference.

## Claims

1. A pigment dispersion liquid comprising:
a resin-coated pigment including a pigment and a resin dispersant that covers the pigment;
a polyoxyethylene-polyoxypropylene block copolymer; and
water,
wherein the concentration of the pigment is 12% by mass or more with respect to the total mass of the pigment dispersion liquid.

2. The pigment dispersion liquid according to claim 1, wherein the pigment is an azo pigment.

3. The pigment dispersion liquid according to claim 1 or 2, wherein:
the resin dispersant comprises one or more hydrophilic structural units (A) in a content of 15% by mass or less with respect to the total mass of the resin dispersant, and one or more hydrophobic structural units (B') represented by Formula (I);
the content ratio of aromatic rings is 20% by mass or less with respect to the total mass of the resin dispersant; and
the hydrophilic structural units (A) comprise at least a structural unit derived from (meth)acrylic acid: 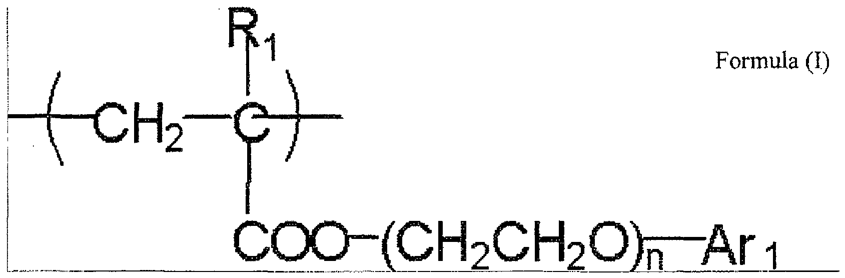
wherein, in Formula (I), R₁ represents a hydrogen atom or a methyl group; Ar₁ represents an unsubstituted aromatic ring or a substituted aromatic ring; and n represents an average repetition number of from 1 to 6.

4. The pigment dispersion liquid according to any one of claims 1 to 3, wherein the content of the polyoxyethylene-polyoxypropylene block copolymer is from 0.5% by mass to 27% by mass with respect to the pigment.

5. The pigment dispersion liquid according to claim 4, wherein the content of the polyoxyethylene-polyoxypropylene block copolymer is from 1% by mass to 7% by mass with respect to the pigment.

6. The pigment dispersion liquid according to any one of claims 1 to 5, wherein a number-average molecular weight of the polyoxyethylene-polyoxypropylene block copolymer is from 10,000 to 30,000.

7. The pigment dispersion liquid according to any one of claims 1 to 6, wherein an acid value of the resin dispersant is from 30 mgKOH/g to 97.8 mgKOH/g.

8. The pigment dispersion liquid according to any one of claims 1 to 7, wherein the resin dispersant has a weight-average molecular weight of 30,000 or more.

9. The pigment dispersion liquid according to any one of claims 2 to 8, wherein the pigment is an azo yellow pigment.

10. A method of producing a pigment dispersion liquid, the method comprising:
a phase inversion emulsification process comprising:
mixing and dispersing a pigment, a resin dispersant, water, and an organic solvent; and
removing at least a part of the organic solvent and the water after the dispersing; and
adding a polyoxyethylene-polyoxypropylene block copolymer after the removing of at least a part of the organic solvent and the water.

11. An ink composition comprising at least the pigment dispersion liquid according to any one of claims 1 to 9, or a pigment dispersion liquid produced by the method according to claim 10.

## Patentansprüche

1. Pigment-Dispersionsflüssigkeit, umfassend:
ein harzbeschichtetes Pigment, das ein Pigment und ein Harz-Dispergiermittel umfasst, welches das Pigment bedeckt;
ein Polyoxyethylen-Polyoxypropylen-Blockcopolymer; und
Wasser,
worin die Konzentration des Pigments 12 Masse% oder mehr in Bezug auf die Gesamtmasse der Pigment-Dispersionsflüssigkeit beträgt.

2. Pigment-Dispersionsflüssigkeit gemäß Anspruch 1, worin das Pigment ein Azopigment ist.

3. Pigment-Dispersionsflüssigkeit gemäß Anspruch 1 oder 2, worin:
das Harz-Dispergiermittel eine oder mehr hydrophile Struktureinheiten (A) in einer Menge von 15 Masse% oder weniger in Bezug auf die Gesamtmasse des Harz-Dispergiermittels, und eine oder mehr hydrophobe Struktureinheiten (B'), dargestellt durch Formel (I), umfasst;
worin der Mengenanteil von aromatischen Ringen 20 Masse% oder weniger in Bezug auf die Gesamtmasse des Harz-Dispergiermittels beträgt; und
die hydrophilen Struktureinheiten (A) mindestens eine Struktureinheit umfassen, die aus (Meth)acrylsäure abgeleitet ist: 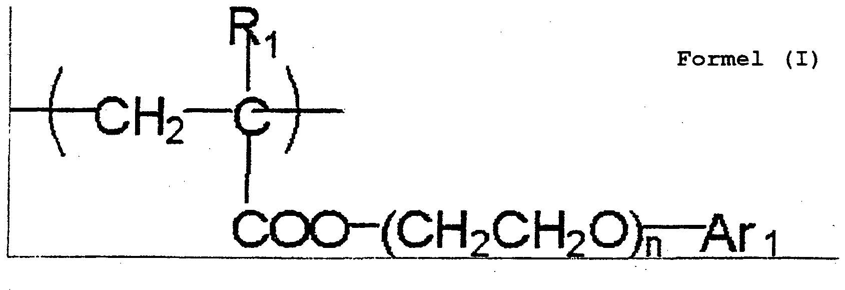
worin in Formel (I) R₁ ein Wasserstoffatom oder eine Methylgruppe darstellt; Ar₁ einen unsubstituierten aromatischen Ring oder einen substituierten aromatischen Ring darstellt; und n eine mittlere Wiederholungszahl von 1 bis 6 darstellt.

4. Pigment-Dispersionsflüssigkeit gemäß irgendeinem der Ansprüche 1 bis 3, worin der Mengenanteil des Polyoxyethylen-Polyoxypropylen-Blockcopolymers von 0,5 bis 27 Masse% in Bezug auf das Pigment beträgt.

5. Pigment-Dispersionsflüssigkeit gemäß Anspruch 4, worin der Mengenanteil des Polyoxyethylen-Polyoxypropylen-, Blockcopolymers von 1 bis 7 Masse% in Bezug auf das Pigment beträgt.

6. Pigment-Dispersionsflüssigkeit gemäß irgendeinem der Ansprüche 1 bis 5, worin das zahlengemittelte Molekulargewicht des Polyoxyethylen-Polyoxypropylen-Blockcopolymers von 10.000 bis 30.000 beträgt.

7. Pigment-Dispersionsflüssigkeit gemäß irgendeinem der Ansprüche 1 bis 6, worin der Säurewert des Harz-Dispergiermittels von 30 bis 97,8 mgKOH/g beträgt.

8. Pigment-Dispersionsflüssigkeit gemäß irgendeinem der Ansprüche 1 bis 7, worin das Harz-Dispergiermittel ein gewichtsgemitteltes Molekulargewicht von 30.000 oder größer aufweist.

9. Pigment-Dispersionsflüssigkeit gemäß irgendeinem der Ansprüche 2 bis 8, worin das Pigment ein gelbes Azopigment ist.

10. Verfahren zur Herstellung einer Pigment-Dispersionsflüssigkeit, worin das Verfahren umfasst:
einen Phaseninversions-Emulgierprozess, umfassend:
Mischen und Dispergieren eines Pigments, eines Harz-Dispergiermittels, Wasser und eines organischen Lösungsmittels; und
Entfernen von zumindest einem Teil des organischen Lösungsmittels und des Wassers nach dem Dispergieren; und
Zugeben eines Polyoxyethylen-Polyoxypropylen-Blockcopolymers nach dem Entfernen von zumindest einem Teil des organischen Lösungsmittels und des Wassers.

11. Tintenzusammensetzung, umfassend mindestens die Pigment-Dispersionsflüssigkeit gemäß irgendeinem der Ansprüche 1 bis 9 oder eine Pigment-Dispersionsflüssigkeit, die durch das Verfahren gemäß Anspruch 10 hergestellt ist.

## Revendications

1. Liquide de dispersion de pigment comprenant :
un pigment revêtu de résine comprenant un pigment et un dispersant de résine qui recouvre le pigment ;
un copolymère séquencé de polyoxyéthylène-poly-oxypropylène ; et
de l'eau,
dans lequel la concentration du pigment est de 12 % en masse ou supérieure par rapport à la masse totale du liquide de dispersion de pigment.

2. Liquide de dispersion de pigment selon la revendication 1, dans lequel le pigment est un pigment azo.

3. Liquide de dispersion de pigment selon la revendication 1 ou 2, dans lequel :
le dispersant de résine comprend une ou plusieurs unités structurelles hydrophiles (A) dans une teneur de 15 % en masse ou inférieure par rapport à la masse totale du dispersant de résine, et une ou plusieurs unités structurelles hydrophobes (B') représentées par la formule (I) ;
le rapport de teneur des cycles aromatiques est de 20 % en masse ou inférieur par rapport à la masse totale du dispersant de résine ; et
les unités structurelles hydrophiles (A) comprennent au moins une unité structurelle dérivée de l'acide (méth)acrylique : 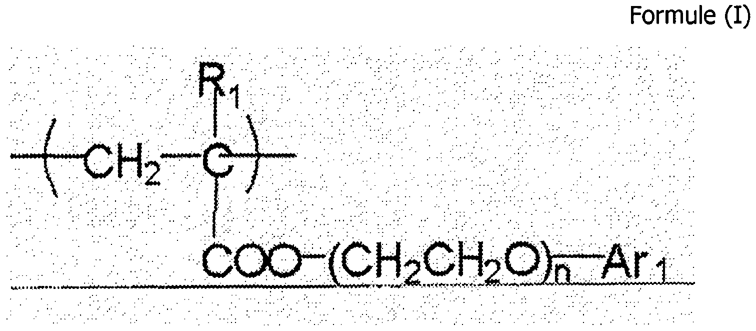
dans laquelle, dans la formule (I), R₁ représente un atome d'hydrogène ou un groupe méthyle ; Ar₁ représente un cycle aromatique non substitué ou un cycle aromatique substitué ; et n représente un nombre de répétition moyen de 1 à 6.

4. Liquide de dispersion de pigment selon l'une quelconque des revendications 1 à 3, dans lequel la teneur du copolymère séquencé de polyoxyéthylène-polyoxypropylène est de 0,5 % en masse à 27 % en masse par rapport au pigment.

5. Liquide de dispersion de pigment selon la revendication 4, dans lequel la teneur du copolymère séquencé de polyoxyéthylène-polyoxypropylène est de 1 % à 7 % en masse par rapport au pigment.

6. Liquide de dispersion de pigment selon l'une quelconque de revendications 1 à 5, dans lequel une masse moléculaire moyenne en nombre du copolymère séquencé de polyoxyéthylène-polyoxypropylène est de 10 000 à 30 000.

7. Liquide de dispersion de pigment selon l'une quelconque des revendications 1 à 6, dans lequel un indice acide du dispersant de résine est de 30 mg de KOH/g à 97,8 mg de KOH/g.

8. Liquide de dispersion de pigment selon l'une quelconque des revendications 1 à 7, dans lequel le dispersant de résine présente une masse moléculaire moyenne en masse de 30 000 ou supérieure.

9. Liquide de dispersion de pigment selon l'une quelconque des revendications 2 à 8, dans lequel le pigment est un pigment jaune azo.

10. Procédé de production d'un liquide de dispersion de pigment, le procédé comprenant :
un procédé d'émulsification par inversion de phase comprenant :
un mélange et la dispersion d'un pigment, d'un dispersant de résine, d'eau, et d'un solvant organique ; et
l'élimination d'au moins une partie du solvant organique et de l'eau après la dispersion ; et
l'addition d'un copolymère séquencé de polyoxyéthylène-polyoxypropylène après l'élimination d'au moins une partie du solvant organique et de l'eau.

11. Composition d'encre comprenant au moins le liquide de dispersion de pigment selon l'une quelconque des revendications 1 à 9, ou un liquide de dispersion de pigment produit par le procédé selon la revendication 10.
